(19) Europäisches Patentamt
European Patent Office
Office européen des brevets

(11) **EP 4 757 227 A1**

(12) **EUROPEAN PATENT APPLICATION**
published in accordance with Art. 153(4) EPC

(43) Date of publication:
**10.06.2026 Bulletin 2026/24**

(21) Application number: **24858347.8**

(22) Date of filing: **16.08.2024**

(51) International Patent Classification (IPC):
*H04L 5/00* (2006.01)

(52) Cooperative Patent Classification (CPC):
**H04L 5/00; H04W 72/0457**

(86) International application number:
**PCT/CN2024/112859**

(87) International publication number:
**WO 2025/044804 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 CN 202311128815**

(71) Applicant: **HUAWEI TECHNOLOGIES CO., LTD.
Shenzhen 518129 (CN)**

(72) Inventors:
• **MA, Dedi
Shenzhen, Guangdong 518129 (CN)**
• **GE, Quan
Shenzhen, Guangdong 518129 (CN)**

(74) Representative: **Isarpatent
Patent- und Rechtsanwälte Part G mbB
Friedrichstrasse 31
80801 München (DE)**

(54) **CARRIER AGGREGATION METHOD, AND COMMUNICATION APPARATUS**

(57)    This application relates to the field of communication technologies, and discloses a carrier aggregation method and a communication apparatus, to improve utilization of a discrete spectrum. The method includes: sending first configuration information, including a first CBW and a first BWP of a terminal device on a first carrier, where the first CBW is a bandwidth of the first carrier; and sending second configuration information, including a second CBW and a second BWP of the terminal device on a second carrier, where the second CBW is a bandwidth of the second carrier, spectrums of the first BWP and the second BWP are non-contiguous, and combination of the second carrier and the first carrier into downlink intra-band contiguous CA is supported. At least one of the first carrier and the second carrier satisfies the following conditions: The first carrier includes a spectrum of an operator and a spectrum of another operator, and the first BWP is an available BWP on the spectrum of the operator; and the second carrier includes a spectrum of an operator and a spectrum of another operator, and the second BWP is an available BWP on the spectrum of the operator. Embodiments of this application are used for carrier aggregation.

FIG. 5

## Description

This application claims priority to Chinese Patent Application No. 202311128815.3, filed with the China National Intellectual Property Administration on August 31, 2023 and entitled "CARRIER AGGREGATION METHOD AND COMMUNICATION APPARATUS", which is incorporated herein by reference in its entirety.

## TECHNICAL FIELD

This application relates to the field of communication technologies, and in particular, to a carrier aggregation method and a communication apparatus.

## BACKGROUND

In carrier aggregation (carrier aggregation, CA), standard cell bandwidth spectrums, for example, 20 M, 30 M, ..., 90 M, and 100 M, defined in a standard are generally aggregated for use. For a scenario in which discrete spectrums in a same band are integrated for use, use of the carrier aggregation is limited to some extent. For example, in some scenarios, intra-band contiguous CA and intra-band non-contiguous CA may be performed within a same band of a same operator, and the intra-band non-contiguous CA is different CC combinations defined in a plurality of standards. In some other scenarios, there are a plurality of non-contiguous carriers in a same band, and the plurality of non-contiguous carriers are on bandwidth spectrums of different operators, or even a part of bandwidth spectrums are bandwidths that are not defined in a standard. Intra-band non-contiguous CA of a same operator cannot be performed on the bandwidth spectrums that are not defined, and use of the CA is limited.

In addition, in a time division duplex (time division duplex, TDD) scenario, for intra-band non-contiguous CA, a quantity of radio frequency channels needs to be doubled. Once a terminal device is delivered from a factory, more discrete spectrum combinations cannot be subsequently supported through radio technology (over-the-air technology, OTA) software upgrade. For example, no intra-band non-contiguous CA combination is currently defined in an N40 band, and the existing terminal devices cannot subsequently support intra-band non-contiguous CA in N40 through OTA upgrade.

## SUMMARY

Embodiments of this application provide a carrier aggregation method and a communication apparatus, to improve utilization of a discrete spectrum.

To achieve the foregoing objectives, the following technical solutions are used in embodiments of this application.

According to a first aspect, a carrier aggregation method is provided. The method includes: receiving first configuration information, where the first configuration information includes a first channel bandwidth CBW and a first bandwidth part BWP of a terminal device on a first carrier, and the first CBW is a bandwidth of the first carrier; and receiving second configuration information, where the second configuration information includes a second CBW and a second BWP of the terminal device on a second carrier, the second CBW is a bandwidth of the second carrier, spectrums of the first BWP and the second BWP are non-contiguous, and combination of the second carrier and the first carrier into downlink intra-band contiguous carrier aggregation CA is supported. The first carrier satisfies the following condition 1, the second carrier satisfies the following condition 2, or the first carrier and the second carrier satisfy the following condition 1 and condition 2: The condition 1 is that the first carrier includes a spectrum of an operator and a spectrum of another operator, and the first BWP is an available BWP on the spectrum of the operator on the first carrier; and the condition 2 is that the second carrier includes a spectrum of an operator and a spectrum of another operator, and the second BWP is an available BWP on the spectrum of the operator on the second carrier.

A spectrum of another operator of the terminal device may be a spectrum that has been allocated to another operator for use, or may be an idle spectrum that is not allocated for use.

This embodiment of this application may be applied to a TDD scenario, and is performed by the terminal device. If a bandwidth of one carrier is a virtual standard bandwidth, the carrier includes a spectrum of an operator and a spectrum of another operator. If at least one of the first carrier and the second carrier includes a spectrum of an operator and a spectrum of another operator, and the first carrier and the second carrier support downlink intra-band contiguous CA, when a standard specifies that a spectrum bandwidth for CA needs to be a standard spectrum bandwidth, one of the bandwidth of the first carrier and the bandwidth of the second carrier is a virtual standard bandwidth, and the other is a virtual standard bandwidth or a standard bandwidth.

In this application, if the first carrier corresponds to a first cell, and the second carrier corresponds to a second cell, the first configuration information means that a primary cell configuration is performed on the terminal device, that is, the first cell is a primary cell, and the second configuration information means that a secondary cell configuration is performed on the terminal device, that is, the second cell is a secondary cell. When the first CBW configured for the terminal device is the bandwidth of the first carrier, and the second CBW is the bandwidth of the second carrier, if the first carrier and the second carrier support the downlink intra-band contiguous CA, after the first configuration information and the second configuration information are sent to the terminal device, it means that the first carrier and the second carrier on a spectrum on which the first BWP and the second BWP that have two segments of non-contiguous spectrums are combined into the downlink intra-band contiguous CA. On the downlink intra-band contiguous CA, both the first BWP and the second BWP are useful spectrums of the terminal device. In this way, even if the spectrums of the first BWP and the second BWP are discrete non-standard bandwidth spectrums of the operator, because the bandwidths of the first carrier and the second carrier are virtual standard bandwidths or standard bandwidths, and combination of the first carrier and the second carrier into the downlink intra-band contiguous CA is supported, the first BWP and the second BWP may be jointly used, to effectively integrate and use discrete spectrums in the TDD scenario, improve utilization of the discrete spectrums, and improve a downlink throughput of the terminal device.

In addition, in the TDD scenario, the second cell that supports the downlink intra-band contiguous CA reuses a radio frequency channel of the first cell, and hardware costs of the terminal device are not increased. For uplink of the terminal device, an uplink signal is still sent on the first BWP of the first cell that is initially accessed, and a local-frequency spectrum is at a center frequency position of the first BWP, so that uplink interference of the terminal device to another operator in the first cell can be avoided.

In a possible design, the receiving the first configuration information includes: when the first carrier is initially accessed, receiving the first configuration information on an initial uplink/downlink BWP of the first carrier. To be specific, when selecting the first cell as an initial access cell, the terminal device may parse the system message of the first cell to obtain the initial uplink/downlink BWP, and initiate an access procedure with a network device on the initial uplink/downlink BWP. After the terminal device accesses the first cell, the network device may send, to the terminal device on the initial uplink/downlink BWP, the first configuration information indicating that the terminal device accesses the first cell, to indicate an available BWP for the terminal device in the first cell, that is, the first BWP. The first BWP may include a resource of the initial uplink/downlink BWP. To be specific, after access, the terminal device switches the available BWP from the initial uplink/downlink BWP to the first BWP. Therefore, when the bandwidth of the first carrier is the virtual standard bandwidth, the first cell is a virtual standard large bandwidth cell, and the terminal device may perform communication on the available BWP of the first cell.

In a possible design, before the receiving the second configuration information, the method further includes: sending an uplink signal on the first BWP, and receiving a downlink signal on the first BWP. To be specific, after the terminal device initially accesses the first cell, if the first cell is a virtual standard large bandwidth cell, the terminal device performs uplink/downlink communication only on the available BWP of the first cell, that is, the first BWP. The second cell is only a cell used for the downlink intra-band contiguous CA, and a BWP used for uplink communication of the terminal device is still the first BWP in the first cell. For uplink communication of the terminal device, a local oscillator frequency is at the center frequency position of the first BWP, so that uplink interference to another operator in the first cell can be avoided.

In a possible design, before the receiving the first configuration information, the method further includes: sending capability information of the terminal device. The capability information includes an indication that the terminal device supports intra-band contiguous CA and a carrier bandwidth supported by the terminal device. If the carrier bandwidth supported by the terminal device includes the bandwidth of the first carrier that is initially accessed, the network device may send the first configuration information to the terminal device, so that the terminal device performs uplink/downlink communication on the first BWP of the first cell. If the terminal device supports the intra-band contiguous CA and supports the bandwidth of the second carrier, the network device may configure the second cell for the terminal device, and combine the first carrier and the second carrier into the downlink intra-band contiguous CA, thereby improving the downlink throughput of the terminal device.

In a possible design, the receiving the second configuration information includes: receiving the second configuration information on the first BWP. To be specific, when configuring the second carrier, the network device may send the second configuration information to the terminal device on a valid BWP of the first carrier, to improve downlink transmission efficiency of the terminal device.

In a possible design, the method further includes: receiving an activation indication, where the activation indication is used for activating the second carrier; and when the second carrier is activated, receiving downlink signals on the first carrier and the second carrier. In this way, when one of the first cell and the second cell is a virtual standard large bandwidth cell, and the other is a virtual standard large bandwidth cell or a standard bandwidth cell, the first BWP and the second BWP that are two segments of non-contiguous spectrums may be aggregated for use, thereby improving the downlink throughput of the terminal device.

In a possible design, the method further includes: sending a channel quality indicator, where the channel quality indicator indicates downlink channel quality of a downlink signal received by the terminal device on the downlink intra-band contiguous CA; when the downlink channel quality does not satisfy a channel quality threshold, receiving a deactivation indication, where the deactivation indication indicates the terminal device to deactivate the second carrier; and when the second carrier is deactivated, receiving the downlink signal on the first BWP, and sending the uplink signal on the first BWP.

For example, in the downlink intra-band contiguous CA, the terminal device further receives a downlink signal of another operator. When signal strength of the another operator received by the terminal device is higher than signal strength of the operator received by the terminal device, and a signal strength difference is large, downlink demodulation performance of the terminal device may be poor. In this case, the network device may indicate the terminal device to deactivate the second cell, so that the terminal device falls back to a single-carrier mode, and performs uplink/downlink communication only on the first BWP of the first cell. In this way, the terminal device restores downlink demodulation performance in the single-carrier mode.

According to a second aspect, a carrier aggregation method is provided. The method includes: sending first configuration information, where the first configuration information includes a first channel bandwidth CBW and a first bandwidth part BWP of a terminal device on a first carrier, and the first CBW is a bandwidth of the first carrier; and sending second configuration information, where the second configuration information includes a second CBW and a second BWP of the terminal device on a second carrier, the second CBW is a bandwidth of the second carrier, spectrums of the first BWP and the second BWP are non-contiguous, and combination of the second carrier and the first carrier into downlink intra-band contiguous carrier aggregation CA is supported. The first carrier satisfies the following condition 1, the second carrier satisfies the following condition 2, or the first carrier and the second carrier satisfy the following condition 1 and condition 2: The condition 1 is that the first carrier includes a spectrum of an operator and a spectrum of another operator, and the first BWP is an available BWP on the spectrum of the operator on the first carrier; and the condition 2 is that the second carrier includes a spectrum of an operator and a spectrum of another operator, and the second BWP is an available BWP on the spectrum of the operator on the second carrier.

For beneficial benefits of the second aspect, refer to the descriptions of the first aspect.

In a possible design, the sending the first configuration information includes: when the terminal device initially accesses the first carrier, sending the first configuration information to the terminal device on an initial BWP of the first carrier.

In a possible design, before the sending the second configuration information, the method further includes: sending a downlink signal to the terminal device on the first BWP, and receiving, on the first BWP, an uplink signal sent by the terminal device.

In a possible design, before the sending the first configuration information, the method further includes: receiving capability information sent by the terminal device, where the capability information includes an indication that the terminal device supports intra-band contiguous CA and a carrier bandwidth supported by the terminal device.

In a possible design, the sending the second configuration information includes: sending the second configuration information to the terminal device on the first BWP.

In a possible design, the method further includes: sending an activation indication to the terminal device, where the activation indication is used for activating the second carrier; and sending downlink signals to the terminal device on the first carrier and the second carrier.

In a possible design, the method further includes: receiving a channel quality indicator sent by the terminal device, where the channel quality indicator indicates downlink channel quality of a downlink signal received by the terminal device on the downlink intra-band contiguous CA; when the downlink channel quality does not satisfy a channel quality threshold, sending a deactivation indication, where the deactivation indication indicates the terminal device to deactivate the second carrier; and sending the downlink signal to the terminal device on the first BWP, and receiving, on the first BWP, the uplink signal sent by the terminal device.

According to a third aspect, a communication apparatus is provided, including: a receiving unit, configured to receive first configuration information, where the first configuration information includes a first channel bandwidth CBW and a first bandwidth part BWP of a terminal device on a first carrier, and the first CBW is a bandwidth of the first carrier. The receiving unit is further configured to receive second configuration information, where the second configuration information includes a second CBW and a second BWP of the terminal device on a second carrier, the second CBW is a bandwidth of the second carrier, spectrums of the first BWP and the second BWP are non-contiguous, and combination of the second carrier and the first carrier into downlink intra-band contiguous carrier aggregation CA is supported. The first carrier satisfies the following condition 1, the second carrier satisfies the following condition 2, or the first carrier and the second carrier satisfy the following condition 1 and condition 2: The condition 1 is that the first carrier includes a spectrum of an operator and a spectrum of another operator, and the first BWP is an available BWP on the spectrum of the operator on the first carrier; and the condition 2 is that the second carrier includes a spectrum of an operator and a spectrum of another operator, and the second BWP is an available BWP on the spectrum of the operator on the second carrier.

In a possible design, the receiving unit is configured to: when the first carrier is initially accessed, receive the first configuration information on an initial uplink/downlink BWP of the first carrier.

In a possible design, the apparatus further includes a sending unit, configured to send an uplink signal on the first BWP. The receiving unit is further configured to receive a downlink signal on the first BWP.

In a possible design, the terminal device further includes the sending unit, configured to: before the first configuration information is received, send capability information of the terminal device, where the capability information includes an indication that the terminal device supports intra-band contiguous CA.

**In** a possible design, the receiving unit is configured to receive the second configuration information on the first BWP.

**In** a possible design, the receiving unit is further configured to: receive an activation indication, where the activation indication is used for activating the second carrier; and when the second carrier is activated, receive downlink signals on the first carrier and the second carrier.

**In** a possible design, a sending unit is further included and is configured to send a channel quality indicator, where the channel quality indicator indicates downlink channel quality of a downlink signal received by the terminal device in the downlink intra-band contiguous CA. The receiving unit is further configured to: when the downlink channel quality does not satisfy a channel quality threshold, receive a deactivation indication, where the deactivation indication indicates the terminal device to deactivate the second carrier. When the second carrier is deactivated, the receiving unit is further configured to receive the downlink signal on the first BWP, and the sending unit is configured to send the uplink signal on the first BWP.

According to a fourth aspect, a communication apparatus is provided, including: a sending unit, configured to send first configuration information, where the first configuration information includes a first channel bandwidth CBW and a first bandwidth part BWP of a terminal device on a first carrier, and the first CBW is a bandwidth of the first carrier. The sending unit is further configured to send second configuration information, where the second configuration information includes a second CBW and a second BWP of the terminal device on a second carrier, the second CBW is a bandwidth of the second carrier, spectrums of the first BWP and the second BWP are non-contiguous, and combination of the second carrier and the first carrier into downlink intra-band contiguous carrier aggregation CA is supported. The first carrier satisfies the following condition 1, the second carrier satisfies the following condition 2, or the first carrier and the second carrier satisfy the following condition 1 and condition 2: The condition 1 is that the first carrier includes a spectrum of an operator and a spectrum of another operator, and the first BWP is an available BWP on the spectrum of the operator on the first carrier; and the condition 2 is that the second carrier includes a spectrum of an operator and a spectrum of another operator, and the second BWP is an available BWP on the spectrum of the operator on the second carrier.

In a possible design, the sending unit is configured to: when the terminal device initially accesses the first carrier, send the first configuration information to the terminal device on an initial uplink/downlink first BWP of the first carrier.

In a possible design, the sending unit is further configured to: before sending the second configuration information, send the downlink signal to the terminal device on the first BWP. The receiving unit is configured to receive, on the first BWP, the uplink signal sent by the terminal device.

In a possible design, the receiving unit is configured to: before sending the first configuration information, receive capability information sent by the terminal device, where the capability information includes an indication that the terminal device supports intra-band contiguous CA and a carrier bandwidth supported by the terminal device.

In a possible design, the sending unit is configured to send the second configuration information to the terminal device on the first BWP.

In a possible design, the sending unit is further configured to: send an activation indication, where the activation indication is used for activating the second carrier; and send downlink signals to the terminal device on the first carrier and the second carrier.

**In** a possible design, the receiving unit is configured to receive a channel quality indicator sent by the terminal device, where the channel quality indicator indicates downlink channel quality of a downlink signal received by the terminal device on the downlink intra-band contiguous CA. The sending unit is further configured to: when the downlink channel quality does not satisfy a channel quality threshold, send a deactivation indication, where the deactivation indication indicates the terminal device to deactivate the second carrier. The sending unit is further configured to send the downlink signal to the terminal device on the first BWP, and the receiving unit is further configured to receive, on the first BWP, the uplink signal sent by the terminal device.

According to a fifth aspect, an apparatus is provided. The apparatus provided in this application has a function of implementing behaviors of the network device or the terminal device in any one or more of the first aspect and the second aspect and the possible implementations of the foregoing aspects, and includes a corresponding component (means) configured to perform the steps or functions described in the foregoing method aspects. The steps or functions may be implemented by software, hardware, or a combination of hardware and software.

In a possible design, the apparatus includes one or more processors, and further, may include a communication unit. The one or more processors are configured to support the apparatus in performing the corresponding function of the network device in the foregoing methods, for example, determining the first configuration information and the second configuration information. The communication unit is configured to support the apparatus in communicating with another device, to implement a receiving and/or sending function, for example, sending the first configuration information and the second configuration information.

Optionally, the apparatus may further include one or more memories. The memory is coupled to the processor, and configured to store program instructions and/or data necessary for the network device. The one or more memories may be integrated with the processor, or may be disposed independent of the processor. This is not limited in this application.

The apparatus may be a base station, a next generation base station (gNodeB, gNB), a transmission and receiving point (transmission and receiving point, TRP), a central unit (distributed unit, DU), a distributed unit (central unit, CU), or the like. The communication unit may be a transceiver or a transceiver circuit. Optionally, the transceiver may alternatively be an input/output circuit or an interface.

The apparatus may alternatively be a chip. The communication unit may be an input/output circuit or an interface of the chip.

In another possible design, the apparatus includes a processor, coupled to a memory. The memory is configured to store a computer program, and the processor is configured to run the computer program in the memory, so that the apparatus performs the method completed by the network device in any one of the second aspect or the possible implementations of the second aspect. Further, the apparatus may further include a transceiver, which performs sending and/or receiving under control of the processor.

In a possible design, the apparatus includes one or more processors, and further, may include a communication unit. The one or more processors are configured to support the apparatus in performing the corresponding function of the terminal device in the foregoing method, for example, activating the second cell. The communication unit is configured to support the apparatus in communicating with another device, to implement a receiving and/or sending function, for example, sending scheduling information or receiving scheduling information.

Optionally, the apparatus may further include one or more memories. The memory is coupled to the processor, and configured to store program instructions and/or data necessary for the apparatus. The one or more memories may be integrated with the processor, or may be disposed independent of the processor. This is not limited in this application.

The apparatus may be a smart terminal, a wearable device, or the like. The communication unit may be a transceiver or a transceiver circuit. Optionally, the transceiver may alternatively be an input/output circuit or an interface.

The apparatus may alternatively be a chip. The communication unit may be an input/output circuit or an interface of the chip.

In another possible design, the apparatus includes a processor, and the processor is coupled to a memory. The memory is configured to store a computer program, and the processor is configured to run the computer program in the memory, so that the apparatus performs the method completed by the terminal device in any one of the first aspect, the second aspect, the third aspect, the possible implementations of the first aspect, the possible implementations of the second aspect, or the possible implementations of the third aspect.

According to a sixth aspect, a system is provided. The system includes the foregoing network device and terminal device.

According to a seventh aspect, a readable storage medium or a program product is provided, and is configured to store a program or instructions. The program or the instructions include an instruction used for performing the method in any one of the first aspect and the second aspect or the possible implementations of the first aspect and the second aspect.

According to an eighth aspect, a chip or a circuit is provided, and is configured to perform the method in any one of the first aspect and the second aspect or the possible implementations of the first aspect and the second aspect.

The method, the apparatus, the system, and the readable storage medium that are provided in embodiments of this application may be applied to an MBB network. It may be understood that any one of the foregoing network device, terminal device, communication apparatus, chip, system, computer-readable storage medium, computer program product, or the like provided above may be used in the corresponding method provided above. Therefore, for beneficial effects that can be achieved by the network device, terminal device, communication apparatus, chip, system, computer-readable storage medium, computer program product, or the like, refer to beneficial effects in the corresponding method. Details are not described herein again.

These aspects or other aspects in this application are more concise and comprehensible in the following descriptions.

## BRIEF DESCRIPTION OF DRAWINGS

FIG. 1 is a diagram of an architecture of a communication system according to an embodiment of this application;
FIG. 2 is a diagram of a plurality of segments of TDD intra-band non-contiguous discrete spectrums according to an embodiment of this application;
FIG. 3 is a diagram of a flexible multi-frequency spectrum combination and a flexible scheduling solution according to an embodiment of this application;
FIG. 4 is a diagram of uplink/downlink interference of a virtual large bandwidth of a discrete multi-frequency spectrum according to an embodiment of this application;

FIG. 5 is a schematic flowchart of a carrier aggregation method according to an embodiment of this application;

FIG. 6 is a diagram of downlink intra-band contiguous CA according to an embodiment of this application;

FIG. 7 is a schematic flowchart of a carrier aggregation method according to an embodiment of this application;

FIG. 8 is a diagram in which two cells on downlink intra-band contiguous CA are virtual standard large bandwidth cells according to an embodiment of this application;

FIG. 9 is a diagram of a structure of a communication apparatus according to an embodiment of this application; and

FIG. 10 is a diagram of a structure of a communication apparatus according to an embodiment of this application.

## DESCRIPTION OF EMBODIMENTS

For ease of understanding, some concepts related to embodiments of this application are described for reference by using examples. Details are as follows.

Time division duplex (time division duplex, TDD) is a full-duplex communication technology used in a mobile communication system, and is a technology for distinguishing a radio channel in a timely manner and continuing to perform an uplink operation in a downlink operation in a frame period. In the mobile communication system in a TDD mode, receiving and transmission are performed in different slots of a same frequency channel (that is, a carrier), and a receiving channel and a transmission channel are separated by using guard time.

Frequency division duplex (frequency division duplex, FDD) indicates that uplink transmission and downlink transmission are performed on different frequencies.

A carrier (carrier) is a radio signal, that is, an electromagnetic wave that is transmitted by a radio frequency device of a base station or a terminal and that has a specific frequency, bandwidth, and standard, which is a subject for carrying information in wireless mobile communication. A carrier used by the base station for sending is referred to as a downlink carrier, and a carrier used by the terminal for sending is referred to as an uplink carrier.

A cell (cell) is described from a perspective of resource management or mobility management by a higher layer (for example, a protocol layer above a physical layer, such as a radio resource control layer or a medium access control layer). A coverage area of each network device may be divided into one or more cells.

In a current NR standard, for one cell, one downlink carrier may be configured, and optionally, one or two uplink carriers may be further configured. For a terminal device, a cell that provides a service for the terminal device may be referred to as a serving cell. A related cell in this application may also be a serving cell.

Subcarrier spacing (subcarrier spacing, SCS): **In** new radio (new radio, NR), a plurality of SCSs are defined, and an SCS corresponding to an SCS sequence number is $2^{\mu} \cdot 15$ kHz. For example, SCSs numbered 0 to 4 respectively correspond to 15 kHz, 30 kHz, 60 kHz, 120 kHz, and 240 kHz.

Carrier aggregation (carrier aggregation, CA): To achieve high-speed transmission, a CA mechanism is used in NR. A terminal that supports the CA may simultaneously perform data transmission on a plurality of carriers, to increase a data transmission rate.

Each carrier in the CA is also referred to as a member carrier or component carrier (component carrier, CC).

In a plurality of cells in the CA, a downlink carrier of one cell carries a control channel, and uplink/downlink data channel scheduling of another cell may be performed.

Intra-band contiguous CA: A plurality of CCs that are combined into the carrier aggregation belong to a same band and have contiguous spectrums. A nominal channel spacing between the CCs satisfies the following requirements in a protocol (TS 38.101-1).

(1) For a band in which a channel raster is 100 kHz, a requirement for a nominal channel spacing (nominal channel spacing) between two adjacent CCs is as follows:

$$\text{nominal channel spacing} = \left\lfloor \frac{BW_{channel(1)} + BW_{channel(2)} - 2\left|GB_{channel(1)} - GB_{channel(2)}\right|}{0.6} \right\rfloor 0.3 \ \ [\text{MHz}].$$

(2) For a band in which a channel raster is not 100 kHz, a requirement for a nominal channel spacing between two adjacent CCs is as follows:

$$\text{nominal channel spacing} = \left\lfloor \frac{BW_{channel(1)} + BW_{channel(2)} - 2\left|GB_{channel(1)} - GB_{channel(2)}\right|}{0.015 \cdot 2^{n+1}} \right\rfloor 0.015 \cdot 2^{n} \ \ [\text{MHz}].$$

$n = \mu_0$. $\mu_0$ is a maximum subcarrier spacing configuration $\mu$. $BW_{Channel(1)}$ and $BW_{Channel(2)}$ are channel bandwidths of two CCs.

$GB_{Channel(i)}$ is a minimum guard band when a subcarrier spacing is set to $\mu 0$ for a CC whose channel bandwidth is i, where i is an integer.

Intra-band non-contiguous CA: A plurality of CCs that are combined into the CA belong to a same band, have non-contiguous spectrums, and do not satisfy the foregoing requirements in the protocol for the intra-band contiguous CA.

A primary carrier (primary cell, PCell) may also be referred to as a primary cell, and is a cell operating on a primary band. UE performs an initial connection establishment process or starts a connection reestablishment process in the cell. In a handover process, the cell is indicated as a primary cell.

A secondary carrier (secondary cell, SCell) may also be referred to as a secondary cell, and is a cell operating on a secondary band. Once a radio resource control (radio resource control, RRC) connection is established, the secondary cell may be configured to provide an additional radio resource.

A bandwidth part (bandwidth part, BWP) is a new concept introduced in NR to adapt to various types of terminal devices. The NR is a system with a high bandwidth, and not all terminal devices can use the high bandwidth. Therefore, a system with a small bandwidth may be used.

The BWP means that a 5G spectrum is divided into many small blocks in specific time. Each BWP may use different parameter sets, and a bandwidth, a subcarrier spacing, and other control parameters of the BWP may be different. This means that several sub-cells with different configurations are further divided in a 5G cell, to adapt to different types of terminals and service types.

A control-resource set (control-resource set, CORESET) is a concept introduced in NR. One CORESET is defined in one cell, includes a group of consecutive or non-consecutive resource blocks (resource blocks, RBs) in frequency domain, and includes one/two/three consecutive OFDM symbols in time domain. Search space (search space) whose aggregation level (aggregation level, AL) is L is defined as a set of several physical downlink control channel (physical downlink control channel, PDCCH) candidates whose sizes are L control channel elements. One search space set (search space set) is a set of search space including different ALs. One search space set is associated with one CORESET.

The following describes the technical solutions in embodiments of this application with reference to the accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

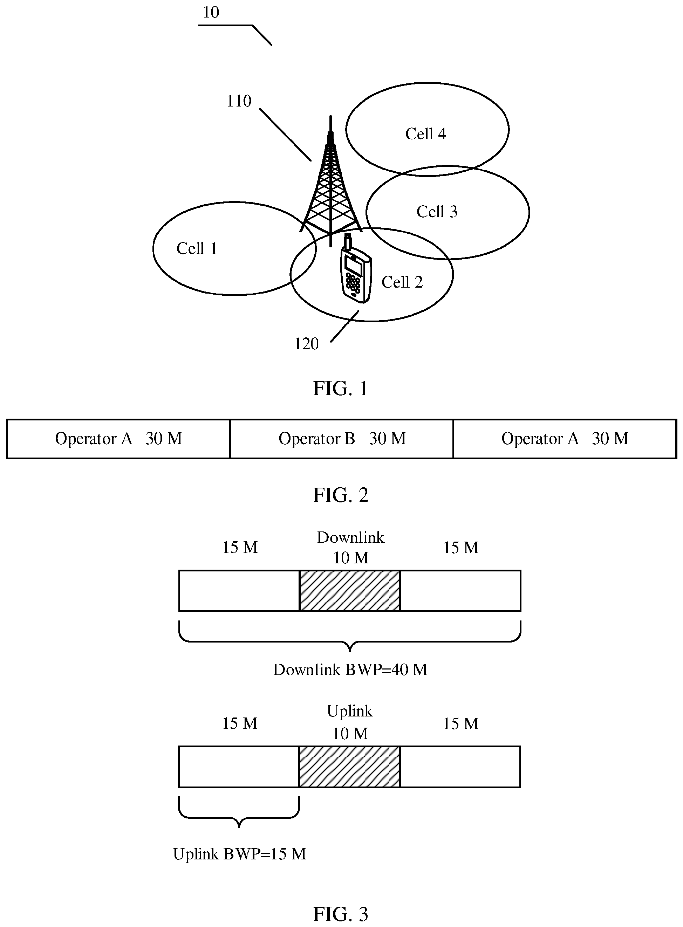

FIG. 1 is a diagram of an architecture of a communication system to which an embodiment of this application is applied. As shown in FIG. 1, the communication system 10 includes a network device 110 and at least one terminal device (for example, a terminal device 120 in FIG. 1). The terminal device is connected to the network device in a wireless manner. The network device may be a radio access network device. The radio access network device is connected to a core network device in a wireless or wired manner. The core network device and the radio access network device may be different independent physical devices, functions of the core network device and logical functions of the radio access network device may be integrated into a same physical device, or a part of functions of the core network device and a part of functions of the radio access network device may be integrated into one physical device. The terminal device may be located at a fixed position, or may be mobile. FIG. 1 is only a diagram. The communication system 10 may further include other network devices, for example, may further include a wireless relay device and a wireless backhaul device. This is not shown in FIG. 1. Quantities of radio access network devices and terminal devices included in the communication system 10 are not limited in embodiments of this application.

The network device 110 is an access device for the terminal device to connect to the communication system 10 in a wireless manner, and may be a base station NodeB, an evolved NodeB eNodeB, a base station in an NR mobile communication system, a base station in a future mobile communication system, an access node in a Wi-Fi (wireless fidelity) system, or the like. A specific technology and a specific device form that are used by the network device 110 are not limited in embodiments of this application.

The network device 110 may provide communication coverage for a specific geographical area, and may communicate with a terminal device within the coverage area. As shown in FIG. 1, the network device 110 may communicate with the terminal device 120 in a coverage area of the network device 110. FIG. 1 shows four cells in which the network device 110 provides communication coverage, which are respectively a cell 1, a cell 2, a cell 3, and a cell 4 that are shown in FIG. 1. The four cells may correspond to a same frequency range, or may correspond to different frequency ranges. For example, the terminal device 120 is located in the cell 2.

The terminal device may also be referred to as a terminal (terminal), UE, a mobile station (mobile station, MS), a mobile terminal (mobile terminal, MT), or the like. The terminal device may be a mobile phone (mobile phone), a tablet computer (Pad), a computer having wireless sending and receiving functions, a virtual reality (virtual reality, VR) terminal device, an augmented reality (augmented Reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The network device and the terminal device may be deployed on land, including an indoor or outdoor device, a handheld device, or a vehicle-mounted device; may be deployed on a water surface; or may be deployed on an airplane, a balloon, and a satellite in air. Application scenarios of the network device and the terminal device are not limited in embodiments of this application.

Embodiments of this application may be applied to downlink signal transmission, or may be applied to uplink signal transmission. For the downlink signal transmission, a sending device is a radio access network device, and correspondingly, a receiving device is a terminal device. For the uplink signal transmission, a sending device is a terminal device, and correspondingly, a receiving device is a radio access network device. A signal transmission direction is not limited in embodiments of this application. Communication between the network device 110 and the terminal device and communication between terminal devices may be performed by using a licensed spectrum (licensed spectrum), an unlicensed spectrum (unlicensed spectrum), or both a licensed spectrum and an unlicensed spectrum. Communication between the radio access network device and the terminal device and communication between terminal devices may be performed over a spectrum below a 6th generation mobile communication technology (6th generation mobile network, 6G), or may be performed over a spectrum above 6G, or may be performed over both a spectrum below 6G and a spectrum above 6G. A spectrum resource used between the network device 110 and the terminal device is not limited in embodiments of this application.

The following describes this application by using a communication architecture provided by the communication system 10.

The 3rd generation partnership project (3rd generation partnership project, 3GPP) standard defines a single carrier that can be supported by a terminal device, that is, a maximum bandwidth of one CC. For example, a single carrier in a 5G TDD frequency range (frequency range, FR) 1 supports a maximum bandwidth of 100 MHz. With the update of mobile networks, more existing spectrums are released and applied in a 5G network. However, due to different historical release time of various spectrums, a same operator has a plurality of non-contiguous carriers in a same band, and even some spectrum bandwidths are not defined in a standard. For example, a bandwidth of 55 M is not defined in a standard. FIG. 2 is a diagram of a plurality of segments of TDD intra-band non-contiguous discrete spectrums. In FIG. 2, in a same band, there are two non-contiguous CCs of 30 M of an operator A, and a CC of 30 M of an operator B between the two CCs of 30 M. How to maximize utilization of frequency spectrum resources, multi-carrier performance, and spectrums is an urgent problem to be resolved.

Currently, the CA is a common technology for integrating and using a plurality of segments of spectrums. The CA may be classified into inter-band CA, intra-band non-contiguous CA, and intra-band contiguous CA based on the spectrums that are integrated and used. However, currently, in the CA, only standard cell bandwidth spectrums, for example, 20 M, 30 M, ..., 90 M, and 100 M, defined in TS 38.101-1 can be aggregated for use. For a scenario in which discrete spectrums in a same band are integrated and used, use of the CA is limited to some extent.

As described above, for aggregation of intra-band spectrums for use, the CA technology mainly relates to the intra-band contiguous CA and the intra-band non-contiguous CA. The intra-band contiguous CA requires contiguous spectrums. Two CCs satisfy a requirement of a nominal channel spacing, which cannot satisfy a requirement of the discrete spectrums in the same band. Theoretically, the intra-band non-contiguous CA can satisfy the requirement of the discrete spectrums in the same band. However, the intra-band non-contiguous CA is restricted by a spectrum combination defined in TS 38.101-1. The CA cannot be performed on a spectrum that is not defined in the standard. In addition, in comparison with the intra-band contiguous CA, for the intra-band non-contiguous CA, a quantity of radio frequency channels in a TDD spectrum needs to be doubled, and change of a radio frequency channel is related. For example, when two non-contiguous CCs are integrated by using the CA technology, each CC corresponds to one radio frequency channel, and two radio frequency channels are needed to perform data transmission. Once the terminal device is delivered from a factory, more band combinations cannot be subsequently supported by performing software upgrading by using OTA, and flexibility of the CA technology is poor.

In some other scenarios, a technology used for discrete spectrum integration is based on a flexible multi-frequency spectrum combination and a flexible scheduling solution. In this solution, a plurality of segments of discrete spectrums that include an intermediate spectrum of another operator are combined into a segment of contiguous spectrum resources, and the segment of contiguous spectrum resources is configured as a virtual large bandwidth cell. A channel is configured in a spectrum part of an operator. Through a flexible uplink/downlink BWP configuration and RB scheduling solution, the terminal device can use only a spectrum resource of the operator. For example, FIG. 3 is a diagram of a flexible multi-frequency spectrum combination and a flexible scheduling solution. If a spectrum is an FDD spectrum, a downlink spectrum may be configured as 40 M in a virtual standard large bandwidth cell. A downlink BWP is configured as 40 M for the terminal device by using RRC signaling, an uplink BWP of an uplink spectrum is 15 M, and the uplink spectrum and the downlink spectrum are different. In the downlink, flexible scheduling is performed, and the intermediate spectrum of 10 M of the another operator is not scheduled. In this way, the terminal device can experience an available large bandwidth of 30 M in the downlink.

Specifically, the solution shown in FIG. 3 may include the following procedure. An example in which the network device is a base station, and the terminal device is UE is used for description.

(1) The base station configures a large bandwidth cell, and a bandwidth of the cell includes a plurality of discrete and non-contiguous spectrums in a same band.

(2) The base station configures a common control channel, for example, a synchronization signal block (synchronization signal block, SSB), a CORESET0, or an initial uplink/downlink (initial UL/DL) BWP on one of the carriers.

(3) The UE initiates an access procedure on the initial UL/DL BWP.

(4) The base station configures large-bandwidth dedicated carriers and BWPs for a user. The large-bandwidth dedicated carriers are, for example, the foregoing large bandwidth cell of the downlink spectrum of 40 M and the foregoing bandwidth cell of the uplink spectrum of 15 M. The BWPs are one of two downlink BWPs of 15 M of an operator in the large bandwidth cell and an uplink BWP of 15 M of the uplink spectrum.

(5) During downlink data transmission, the base station allocates BWPs to the user in the large bandwidth cell in real time based on service requirements, schedules RB resources, and performs filtering processing for the user to reduce interference.

(6) During uplink data transmission, the base station performs interference band detection in real time and dynamically schedules uplink RB resources for the user in the uplink BWP based on interference and an uplink data transmission volume.

In this way, for the plurality of non-contiguous spectrums in the same band, a plurality of carriers can be combined into a virtual and contiguous large bandwidth cell. The plurality of non-contiguous spectrums can share one common control channel. An integrated scheduler of the base station flexibly performs determining based on a carrier support capability, physical resource block (physical resource block, PRB) utilization, and interference information of the UE to configure, in a virtual large bandwidth of a cell, a user-dedicated carrier bandwidth and a BWP for the user.

Because an aggregated virtual large bandwidth spectrum includes a spectrum of another operator, interference in four different directions exists in an uplink/downlink data transmission process between the base station and the UE.

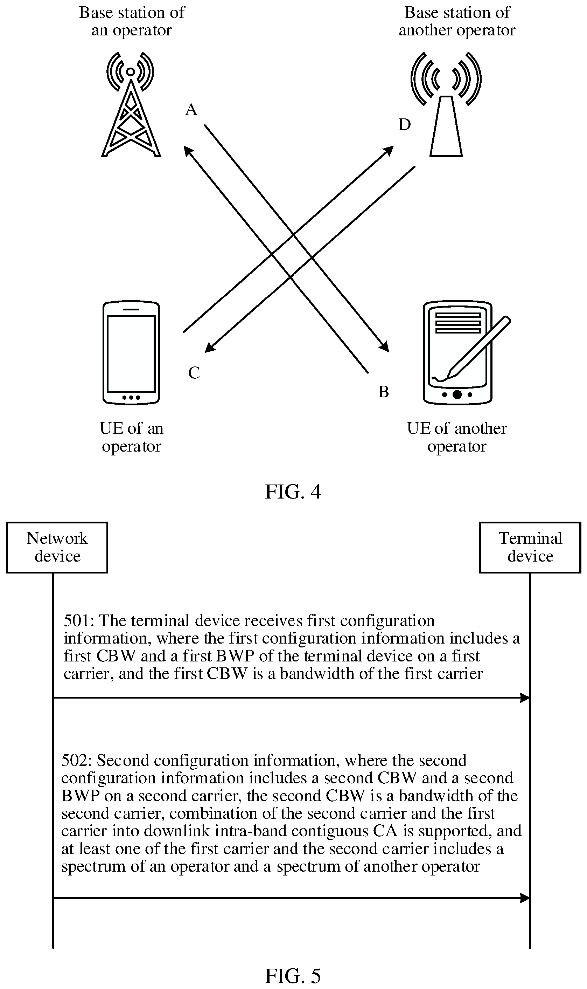

FIG. 4 is a diagram of uplink/downlink interference of a virtual large bandwidth of a discrete multi-frequency spectrum. In the downlink, interference exists in a direction A and a direction C. In the direction A, there is downlink interference from a base station of an operator in a virtual large bandwidth cell to UE of another operator. In the direction C, there is downlink interference from a base station of the another operator to a terminal in the virtual large bandwidth cell. In the uplink, interference exists in a direction D and a direction B. In the direction D, there is uplink interference from UE in a virtual large bandwidth cell to a base station of another operator. In the direction B, there is uplink interference from UE of the another operator to a base station of an operator in the virtual large bandwidth cell.

Generally, when the base station performs downlink sending, a filter of a sub-bandwidth in a BWP may be added to the base station of the virtual large bandwidth cell, to reduce the downlink interference in the direction A. A capability of detecting and identifying an uplink interference band can be enhanced when the base station performs uplink receiving. Based on uplink interference measurement on a per-RB basis, an interference band is identified, a filter is added to eliminate interference, or interference avoidance scheduling processing is performed, to reduce impact of the interference in the direction B. The base station may also perform interference measurement, and flexibly adjust a BWP position, to reduce the interference in the direction C. However, if the interference in the direction D is applied to the TDD spectrum, the base station cannot reduce the interference, which is limited by the following plurality of principle factors.

(1) In a TDD system, a protocol specifies that center frequencies of an uplink BWP and a downlink BWP need to be the same. Therefore, in this virtual large bandwidth technology, the center frequency of the uplink BWP is close to a center frequency position of the virtual large bandwidth cell. A case in which the center frequency is in a band of another operator may occur.

(2) A position of an uplink local oscillator frequency (carrier leakage) of the UE is generally at a center RE of the uplink BWP, and an intermediate spectrum of the virtual large bandwidth belongs to another operator. As a result, the local oscillator frequency cannot be reduced on a base station of an operator. Uplink local oscillator interference affects demodulation performance of a base station of the another operator.

(3) Considering UE compatibility and implementation complexity, the UE does not use a plurality of filters in one BWP, and general (general) interference generated by an uplink scheduled RB to a non-scheduled RB also exists.

Therefore, for the TDD spectrum, this application provides a carrier aggregation method, to implement integration of discrete spectrums in a same band, so as to resolve a problem that intra-band non-contiguous CA is not supported on a terminal device side, and resolve a problem of uplink/downlink interference in the foregoing four directions. In this application, when a plurality of spectrums of a same operator are non-contiguous, a manner of configuring the virtual large bandwidth may be changed. This application is different from a manner of configuring one complete virtual standard bandwidth cell in the conventional technology. In this application, in a TDD scenario, non-contiguous spectrums of an operator and spectrums of another operator in a same band may be divided into two standard bandwidth cells/carriers that support contiguous CA. The two cells/carriers may form intra-band contiguous CA, and each standard bandwidth cell includes a segment of valid spectrum. In addition, the terminal device may operate in a spectrum available to the operator by flexibly configuring a user-dedicated BWP. In addition, downlink intra-band contiguous CA may be configured for a terminal device having a CA capability. In this way, if there are a plurality of segments of non-contiguous spectrums of the operator, downlink transmission efficiency can be enhanced when the plurality of segments of non-contiguous spectrums of the operator are allocated to the two standard bandwidth carriers, and the two standard bandwidth carriers are combined into the downlink intra-band contiguous CA and configured for the terminal device.

In addition, a carrier subsequently configured for the terminal device is only used for downlink contiguous CA transmission. Therefore, for uplink, the uplink BWP is still a valid BWP of an operator in a carrier first configured. In this way, the user can have experience of a large bandwidth in downlink receiving, and a position of an uplink local oscillator frequency of the terminal device is at a center RE of the BWP of the operator, so that uplink interference (the interference in the direction D) from a terminal of the operator to the base station of the another operator can be eliminated.

The following describes embodiments of this application.

In this application, discrete TDD spectrums in a specific band that are integrated and used by using a virtual large bandwidth technology and an intra-band contiguous CA technology is applicable to the following plurality of scenarios. For example, in a scenario 1, intra-band non-contiguous CA in the band is not specified in the protocol. In a scenario 2, bandwidths of two segments of discrete spectrums are not within a CA band combination. In a scenario 3, at least one of the two segments of discrete spectrums is not a standard NR cell bandwidth. An applicable scenario is not limited in this application.

FIG. 5 is a schematic flowchart of a carrier aggregation method according to an embodiment of this application. The method includes the following procedure.

501: A terminal device receives first configuration information, where the first configuration information includes a first channel bandwidth (channel bandwidth, CBW) and a first BWP of the terminal device on a first carrier, and the first CBW is a bandwidth of the first carrier.

That the terminal device receives the first configuration information may include: The terminal device receives the first configuration information sent by a network device. Correspondingly, that the network device sends the first configuration information is that the network device sends the first configuration information to the terminal device.

The following uses an example in which the terminal device is UE, and the network device is a base station for description.

In some embodiments, the base station may split, based on a bandwidth combination of intra-band contiguous CA supported in a protocol and in combination with a plurality of segments of discrete spectrums that need to be integrated, an entire segment of spectrum on which the plurality of segments of discrete spectrums are located into at least two segments, and a plurality of standard bandwidth cells are configured on the base station. It is assumed that there are two standard bandwidth cells: a first cell and a second cell. Two possible splitting results of the entire segment of spectrum are as follows.

(1) The first cell is a standard bandwidth cell (a spectrum of an operator), and the second cell is a virtual standard large bandwidth cell (including the spectrum of the operator and a spectrum of another operator). When the first cell corresponds to the first carrier, a spectrum of the first carrier is the spectrum of the operator. When the second cell corresponds to a second carrier, the second carrier includes the spectrum of the operator and the spectrum of the another operator. Alternatively, the first cell is a virtual standard large bandwidth cell, and the second cell is a standard bandwidth cell. The first carrier includes a spectrum of an operator and a spectrum of another operator, and a spectrum of a second carrier is the spectrum of the operator. Carriers of the two cells are contiguous.

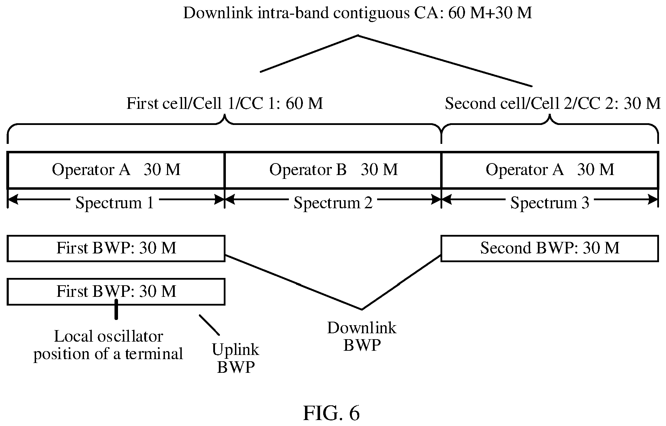

For example, refer to a diagram of a CA scenario shown in FIG. 6. When the first cell is the virtual standard large bandwidth cell, a virtual standard large bandwidth is intra-band contiguous of 60 M that combines spectrums of at least two operators, for example, the virtual standard large bandwidth includes a spectrum of an operator A and a spectrum of an operator B. In this case, for any operator, a spectrum bandwidth of the operator on the first carrier is less than the bandwidth of the first carrier. When the second cell is the standard bandwidth cell, a bandwidth of the second carrier is 30 M defined in the standard.

(2) Both the first cell and the second cell are virtual standard large bandwidth cells.

To be specific, the first carrier includes spectrums of at least two operators, and the second carrier also includes spectrums of at least two operators. Spectrums of the first carrier and the second carrier are contiguous. For any operator, a spectrum bandwidth of the operator on the first carrier is less than the bandwidth of the first carrier, and a spectrum bandwidth of the operator on the second carrier is less than the bandwidth of the second carrier.

In the configured first cell and second cell, two segments of valid spectrums of a same operator are non-contiguous.

For example, when selecting a cell to camp on, and selecting to access the first cell based on signal strength, a frequency priority, and the like, the UE may parse a system message received from a common control channel of the first cell to obtain an initial uplink/downlink BWP of the first cell. Then, a base station procedure of accessing the first cell may be performed on the initial uplink/downlink BWP.

In some embodiments, when the terminal device accesses the first cell on the initial uplink/downlink BWP, the terminal device may send capability information of the terminal device to the network device. The capability information includes an indication that the terminal device supports intra-band contiguous CA and a carrier bandwidth supported by the terminal device. Correspondingly, the network device receives the capability information sent by the terminal device.

If the carrier bandwidth supported by the terminal device includes the bandwidth of the first carrier, the terminal device may receive, on the initial uplink/downlink BWP on which the first carrier is initially accessed, the first configuration information sent by the first carrier. Correspondingly, the network device sends the first configuration information to the terminal device on the first BWP. The first configuration information includes the first CBW and the first BWP of the terminal device on the first carrier. The first CBW is the bandwidth of the first carrier. In this case, the network device switches, to an available BWP of the terminal device on the first carrier, the initial uplink/downlink BWP on which the terminal device accesses the first cell, that is, the first BWP. The first BWP may include a resource of the initial uplink/downlink BWP.

If the first cell is the virtual standard large bandwidth cell, the first carrier includes a spectrum of an operator and a spectrum of another operator, the first CBW may be understood as a user-dedicated carrier bandwidth of the terminal device that is configured by the network device, the user-dedicated carrier bandwidth is the bandwidth of the first carrier, and the first BWP may be understood as an available BWP or a valid BWP of the terminal device on the spectrum of the operator on the first carrier.

If the first cell is the standard bandwidth cell, the first CBW configured for the terminal device is the bandwidth of the first carrier of the first cell, and the first CBW is a bandwidth of an operator of the terminal device. In other words, the bandwidth of the first carrier is a user-dedicated carrier bandwidth configured by the network device. The first BWP is an available BWP or a valid BWP on the first carrier.

A spectrum of another operator of the terminal device may be a spectrum that has been allocated to another operator for use, or may be an idle spectrum that is not allocated for use.

For example, it is assumed that downlink intra-band contiguous CA in this application is a CC 1 and a CC 2 shown in FIG. 6, the CC 1 is a carrier corresponding to the virtual standard large bandwidth cell, and the CC 2 is a carrier corresponding to the standard bandwidth cell. The first cell may be a cell 1 corresponding to the CC 1, or may be a cell 2 corresponding to the CC 2. A bandwidth of the CC 1 is 60 M, which includes a bandwidth of 30 M of the operator A and a bandwidth of 30 M of the operator B. A bandwidth of the CC 2 is 30 M of the operator A. If an operator of the UE is the operator A, the first carrier selected by the UE for initial access is the CC 1, the first CBW of the UE on the first carrier is a carrier bandwidth of the CC 1, that is, 60 M, and the first BWP may be the bandwidth spectrum of 30 M of the operator A in the cell 1. If the first carrier initially accessed by the UE is the CC 2, the first CBW of the UE on the first carrier is a carrier bandwidth of the CC 2, that is, 30 M of the operator A in the cell of the CC 2, and the first BWP may be the bandwidth spectrum of 30 M of the operator A in the cell 2 corresponding to the CC 2. In other words, an available BWP/a valid BWP of the UE on the CC 2 is the carrier bandwidth of the entire cell 2 of the CC 2.

Then, the terminal device and the network device may perform uplink/downlink communication on the first BWP.

Therefore, in some embodiments, after the terminal device receives the first configuration information, the terminal device sends an uplink signal on the first BWP, and receives a downlink signal on the first BWP. Correspondingly, the network device sends the downlink signal to the terminal device on the first BWP, and receives, on the first BWP, the uplink signal sent by the terminal device.

502: The terminal device receives second configuration information, where the second configuration information includes a second CBW and a second BWP of the terminal device on a second carrier, the second CBW is a bandwidth of the second carrier, and combination of the second carrier and the first carrier into downlink intra-band contiguous CA is supported.

In some embodiments, after the terminal device accesses the first cell, if the network device determines a carrier bandwidth supported by the terminal device, the terminal device supports intra-band contiguous CA, and there is a second carrier that is contiguous to the first carrier in a same band, the bandwidth of the second carrier is a standard bandwidth, and the network device may configure an SCell for the terminal device. In other words, the network device may send the second configuration information to the terminal device on the first BWP. Correspondingly, the terminal device receives the second configuration information on the first BWP, the first cell initially accessed by the terminal device is a PCell, and a to-be-configured SCell is denoted as a second cell.

In some embodiments, the first carrier satisfies the following condition 1, the second carrier satisfies the following condition 2, or the first carrier and the second carrier satisfy the following condition 1 and condition 2.

The condition 1 is that the first carrier includes a spectrum of an operator and a spectrum of another operator, and the first BWP is an available BWP on the spectrum of the operator on the first carrier.

The condition 2 is that the second carrier includes a spectrum of an operator and a spectrum of another operator, and the second BWP is an available BWP on the spectrum of the operator on the second carrier.

Spectrums of the second BWP and the first BWP are non-contiguous.

In other words, in this application, when the first carrier corresponds to the first cell, and the second carrier corresponds to the second cell, at least one of the first cell and the second cell is a virtual standard large bandwidth cell that includes the spectrum of the operator and the spectrum of the another operator.

After the network device configures the second cell for the terminal device, the network device may activate the second cell based on a service requirement of the terminal device. Therefore, in some embodiments, the method may further include: The terminal device receives an activation indication, where the activation indication is used for activating the second carrier; and when the second carrier is activated, receives downlink signals on the first carrier and the second carrier.

Therefore, when combination of the second carrier and the first carrier into the downlink intra-band contiguous CA is supported, and the bandwidth of the first carrier and the bandwidth of the second carrier are standard bandwidths, if the second carrier is activated, the network device may simultaneously send downlink data to the terminal device on the first carrier and the second carrier, and the terminal device may simultaneously receive, on the first carrier and the second carrier, the downlink data sent by the network device.

Regardless of whether the first cell is the virtual standard large bandwidth cell, and the second cell is the standard bandwidth cell, the first cell is the standard bandwidth cell, and the second cell is the virtual large bandwidth cell, or both the first cell and the second cell are the virtual standard large bandwidth cells, the configured second cell is used for downlink transmission by the network device. When the network device sends the downlink data on the downlink intra-band contiguous CA, and the terminal device receives the downlink data on the downlink intra-band contiguous CA, the network device still receives, only on the first BWP of the initially accessed first cell, the uplink signal sent by the terminal device, and the terminal device sends the uplink signal on the first BWP.

For example, as shown in FIG. 6, if the first carrier is the CC 1, the second carrier herein may be the CC 2. If the first carrier is the CC 2, the second carrier herein may be the CC 1. That is, if the UE has a carrier bandwidth capability that supports the CC 1 and a carrier bandwidth capability that supports the CC 2, and a carrier of the CC 1 and a carrier of the CC 2 are contiguous, the base station may combine the CC 1 and the CC 2 into the downlink intra-band contiguous CA, to expand a bandwidth for receiving a downlink signal by the UE, and enhance downlink transmission efficiency. If a carrier for initial access is the CC 1, the base station still receives, on the first BWP on the CC 1, uplink data sent by the UE.

In this way, in a TDD spectrum, when the first CBW configured for the terminal device is the bandwidth of the first carrier, and the second CBW is the bandwidth of the second carrier, if the first carrier and the second carrier support the downlink intra-band contiguous CA, after the first configuration information and the second configuration information are sent to the terminal device, it means that the first carrier and the second carrier on a spectrum on which the first BWP and the second BWP that have two segments of non-contiguous spectrums are combined into the downlink intra-band contiguous CA. On the downlink intra-band contiguous CA, both the first BWP and the second BWP are useful spectrums of the terminal device. In this way, even if the spectrums of the first BWP and the second BWP are discrete non-standard bandwidth spectrums of the operator, because the bandwidths of the first carrier and the second carrier are virtual standard bandwidths or standard bandwidths, and combination of the first carrier and the second carrier into the downlink intra-band contiguous CA is supported, the first BWP and the second BWP may be jointly used, to effectively integrate and use discrete spectrums in a TDD scenario, improve utilization of the discrete spectrums, and improve a downlink throughput of the terminal device.

In addition, for uplink of a carrier combination, downlink intra-band carrier aggregation has no influence on a case in which an uplink BWP is a valid BWP of the operator. To be specific, the terminal device operates in a single-carrier mode in an uplink, so that the user can have experience of a large bandwidth, and a position of an uplink local oscillator frequency of the terminal device is at a center RE of the BWP of the operator, so that uplink interference from a terminal of the operator to a base station of another operator can be eliminated.

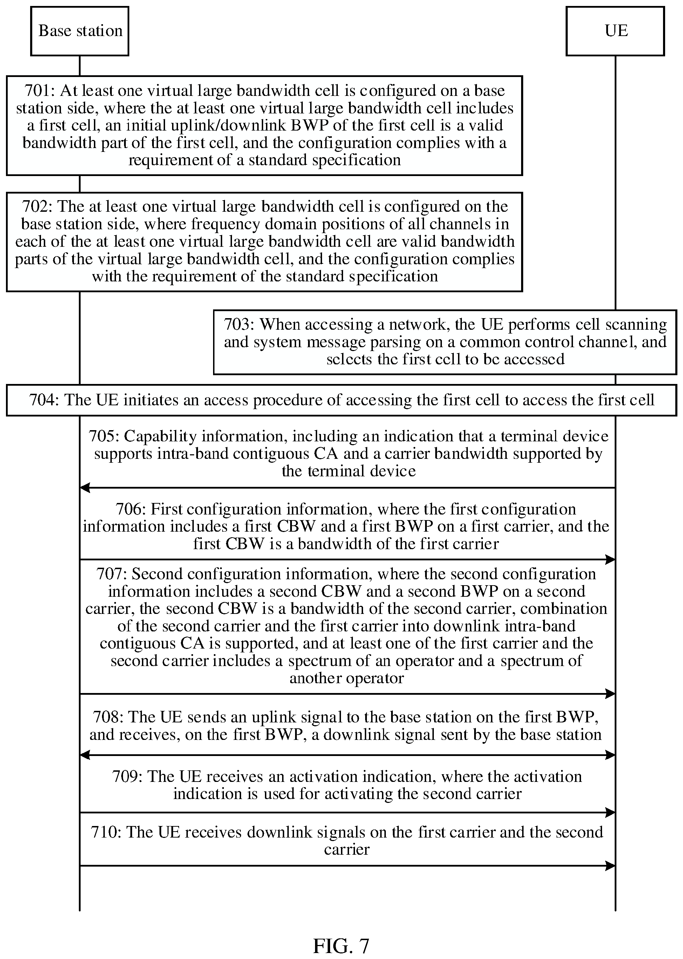

FIG. 7 is a schematic flowchart of a carrier aggregation method according to an embodiment of this application. The method includes the following procedure.

701: At least one virtual large bandwidth cell is configured on a base station side, where the at least one virtual large bandwidth cell includes a first cell, an initial uplink/downlink BWP of the first cell is a valid bandwidth part of the first cell, and the configuration complies with a requirement of a standard specification.

The standard specification may be 3GPP.

For example, in a TDD spectrum, for a same operator, there may be a plurality of segments of non-contiguous spectrums in a same band. Some spectrums may not be defined in a band combination of CA, bandwidths of some spectrums may not be standard NR cell bandwidths, or intra-band non-contiguous CA is not defined in a band. In this application, the plurality of segments of non-contiguous spectrums in the TDD spectrum may be integrated on the base station side, and at least one virtual large bandwidth spectrum is configured, to obtain at least one virtual large bandwidth cell, so that downlink intra-band contiguous CA can be implemented through combination based on the at least one virtual large bandwidth cell for the same operator. The virtual large bandwidth cell is named in this manner because each virtual large bandwidth cell includes a spectrum of an operator and a spectrum of another operator. In some embodiments, a segment of spectrum may be a valid bandwidth part of an operator, or may be an invalid bandwidth part of another operator. That is, a segment of spectrum may belong to a plurality of virtual large bandwidth cells.

An example in which the at least one virtual large bandwidth cell includes the first cell is used. When the first cell is configured, a carrier bandwidth and an initial available bandwidth part of the first cell, that is, an initial uplink/downlink BWP on which the first cell is initially accessed, may be configured. The configuration of the carrier bandwidth of the first cell satisfies the requirement of the standard specification. For example, the first cell is the cell corresponding to the CC 1 shown in FIG. 6. Before the CC 1 is configured, a spectrum 1 of an operator A and a spectrum 2 of an operator B exist in the segment of spectrum, and the spectrum 1 of the operator A and the spectrum 2 of the operator B are contiguous spectrums. Considering that there is still a spectrum 3 of the operator A that is contiguous to the spectrum 2 of the operator B, if bandwidths of the spectrum 1 and the spectrum 2 may be combined into a defined large bandwidth that complies with a standard, in this application, the spectrum 1 and the spectrum 2 may be combined into a virtual large bandwidth carrier on a base station, to obtain a virtual CC 1, corresponding to the first cell. An initial uplink/downlink BWP on the CC 1 is a part of resources in the spectrum 1, namely, a valid spectrum, that is, a valid BWP used when the terminal device accesses the CC 1 on the CC 1. In this way, if the downlink intra-band contiguous CA needs to be performed, when a spectrum of the CC 2 is the spectrum 3, CA may be performed on the CC 1 and the CC 2. In this way, although nominally, the CC 1 and the CC 2 are combined into the downlink intra-band contiguous CA, an actually used bandwidth part is the valid BWP of the CC 1 and the spectrum 3 of the CC 2.

In addition, when the first cell is configured, a center frequency, transmit/receive power, and the like of the first cell may be further configured. The center frequency of the first cell is close to a center frequency position of the available bandwidth part of the first cell. The valid bandwidth part of the first cell may be configured by configuring a start frequency position and an end frequency position.

702: The at least one virtual large bandwidth cell is configured on the base station side, where frequency domain positions of all channels in each of the at least one virtual large bandwidth cell are valid bandwidth parts of the virtual large bandwidth cell, and the configuration complies with the requirement of the standard specification.

In other words, based on configuring the at least one virtual large bandwidth cell, the base station may configure frequency domain positions of all channels, such as an SSB, a CORESET0, and another resource, in the virtual large bandwidth cell on a valid BWP of the virtual large bandwidth cell. In this way, a configured CC 1 in FIG. 6 is used as an example. When performing transmission of uplink/downlink data to UE of the operator A in the first cell, the base station performs data transmission by using only a channel on the valid BWP.

Configurations of the SSB, the CORESET0, and another resource that are configured on the base station side complies with the requirement of the standard specification.

703: When accessing a network, the UE performs cell scanning and system message parsing on a common control channel, and selects the first cell to be accessed.

For example, in an NR system, if the UE in a connected state, an idle state, or an active state needs to access the network, the UE may search for the SSB on the common control channel, obtain a master information block (master information block, MIB) through parsing based on the SSB, and parse the MIB to obtain a position of a downlink demodulation reference signal (demodulation reference signal, DMRS), a configuration of an SIB1 in a physical downlink control channel (physical downlink control channel, PDCCH), a cell blocking indication (in an SIB1 in 4G), common search space, and the like. Then, the UE may receive the SIB1 based on the configuration of the SIB1, parse the SIB1 to obtain availability information and scheduling information of other SIBs (for example, mapping of SIBs to system information (system information, SI), periodicity, and an SI window size). In addition, the SIB1 indicates whether only one or more SIBs are provided as required and a configuration needed in a case of performing an SI request by the UE, and further carries needed restriction information for evaluating whether the UE is allowed to access a cell and for a terminal-common radio resource configuration and unified access control (unified access control, UAC).

For example, if the UE receives SSBs sent by a plurality of cells, and obtains, through parsing, a signal strength access threshold, a frequency priority, and the like of each cell, the UE may select, based on the signal strength access threshold of each cell, cells that can be accessed, and select a cell with a highest frequency priority from the cells that can be accessed. If the first cell is selected to be accessed, time-frequency domain resource information of the initial uplink/downlink BWP, time-frequency domain resource information of a PDCCH CORESET, time-frequency domain resource information of a PUCCH, configuration information of a first carrier, and the like may be obtained from the SIB1 that is received from the first cell.

704: The UE initiates an access procedure of accessing the first cell to access the first cell.

For example, the UE may initiate, on the initial uplink/downlink BWP based on a configuration of the initial uplink/downlink BWP obtained by parsing the SIB1 of the first cell, four-way handshake with a base station of the first cell, perform the access procedure, and perform uplink synchronization with the first cell, to access the first cell.

Then, the base station may configure an RRC link between the first cell and the UE for the UE, which includes a signaling radio bearer (signal radio bearer, SRB)/data radio bearer (data radio bearer, DRB) and another configuration, so that the RRC link is established between the base station and the UE.

Then, the base station may perform initial context (initial context) establishment with the UE and a core network side, to establish an initial context of the UE on the base station, which includes a packet data unit (packet data unit, PDU) session context, a security key, a mobility restriction list, a UE radio capability, a security capability, and the like. In this way, when data transmission is performed subsequently, the base station may perform uplink/downlink data transmission with the UE based on the initial context.

In this case, the first cell herein may be a virtual standard large bandwidth cell, or may be a standard bandwidth cell.

705: The UE reports capability information to the base station, where the capability information includes an indication that the terminal device supports the intra-band contiguous CA and a carrier bandwidth supported by the terminal device.

For example, after the UE, the base station, and the core network side complete initial context establishment, the UE may report the capability information to the base station on the initial uplink/downlink BWP of the first cell, which includes an indication indicating whether the terminal device supports the intra-band contiguous CA, an indication of the carrier bandwidth supported by the terminal device, a band combination (band combination, BC), and other information.

706: The base station sends first configuration information to the UE, where the first configuration information includes a first CBW and a first BWP of the terminal device on the first carrier, and the first CBW is a bandwidth of the first carrier.

After the base station obtains the capability information of the UE, when the base station determines a bandwidth of the first carrier that the UE supports access, the base station may send the first configuration information to a user. The first configuration information includes a user-dedicated carrier bandwidth of the UE on the first carrier and an available BWP of the UE.

The user-dedicated carrier bandwidth is denoted as the first CBW, and the first CBW is the bandwidth of the first carrier. The available BWP/a valid BWP of the UE on the first carrier is denoted as the first BWP. The initial uplink/downlink BWP on which the UE accesses the first cell may be a part of resources of the first BWP.

When a cell of the first carrier is the first cell, the first cell may be a virtual standard large bandwidth cell, or may be a standard bandwidth cell.

For example, refer to FIG. 6. If the first cell is the virtual standard large bandwidth cell, and the first carrier is the CC 1, the user-dedicated carrier bandwidth may be a virtual large bandwidth of the CC 1, that is, a carrier bandwidth of the CC 1, for example, 60 M, which includes the bandwidth of 30 M of the operator A to which the UE belongs and a bandwidth of 30 M of an operator B. The available BWP of the UE is the bandwidth spectrum of 30 M of the operator A on the CC 1. In this case, a cell CBW of the UE on the CC 1 is the bandwidth of the first carrier of the first cell, that is, the virtual large bandwidth, and the bandwidth of the available BWP of the UE on the first carrier is the bandwidth spectrum of 30 M of the operator A on the first carrier.

Refer to FIG. 6, if the first cell is the standard bandwidth cell, the first carrier is the CC 2, and an operator of the CC 2 is the operator A to which the UE belongs, the first CBW configured for the UE, that is, the user-dedicated carrier bandwidth, may be a bandwidth of the CC 2, for example, 30 M of the operator A on the CC 2. The available BWP of the UE is the bandwidth spectrum of 30 M of the CC 2. In this case, the bandwidth of the available BWP is the user-dedicated carrier bandwidth, or a bandwidth spectrum of the first BWP is an entire spectrum of the first carrier, or the available BWP of the UE is an entire spectrum of a cell CBW of the first cell.

In some embodiments, that the base station sends the first configuration information to the UE may include: The base station sends RRC signaling to the UE. The RRC signaling includes the first configuration information. Correspondingly, the UE receives the RRC signaling sent by the base station. A configuration of the first BWP includes a bandwidth size of the first BWP, an offset of a frequency domain position of a BWP relative to an initial subcarrier position of the first carrier, a subcarrier spacing of the first carrier, and the like.

707: The base station sends second configuration information to the UE, where the second configuration information includes a second CBW and a second BWP of the terminal device on a second carrier, the second CBW is a bandwidth of the second carrier, and combination of the second carrier and the first carrier into downlink intra-band contiguous CA is supported.

In some embodiments, when the base station determines that the terminal device supports the intra-band contiguous CA, there is a second carrier that is contiguous to the first carriers, an operator of the second carrier is the operator A to which the UE belongs, and a carrier bandwidth supported by the UE includes the bandwidth of the second carrier, the base station may determine that combination of the second carrier and the first carrier into the downlink intra-band contiguous CA is supported. Therefore, when an available spectrum (an available BWP) on the second carrier and an available spectrum on the first carrier are non-contiguous, to enhance downlink receiving efficiency of the UE, the base station may configure an SCell, that is, a second cell, for the UE, so that when there is a large-bandwidth service requirement, the UE may receive a downlink signal of the first cell and a downlink signal of the second cell on two segments of available BWPs of the downlink intra-band contiguous CA.

Certainly, before sending the second configuration to the UE, the base station needs to perform measurement on the second carrier/cell. If signal quality of the second carrier is good, the base station sends the second configuration information to the UE.

For example, the second cell may be a standard bandwidth cell, or may be a virtual standard large bandwidth cell. If the second cell is the standard bandwidth cell, for example, the cell 2 of the CC 2 shown in FIG. 6, when the first carrier is the CC 1, the CC 1 and the CC 2 are combined into downlink intra-band contiguous CA, and the UE may simultaneously receive downlink signals on the first BWP of the CC 2 and the second BWP of the CC2.

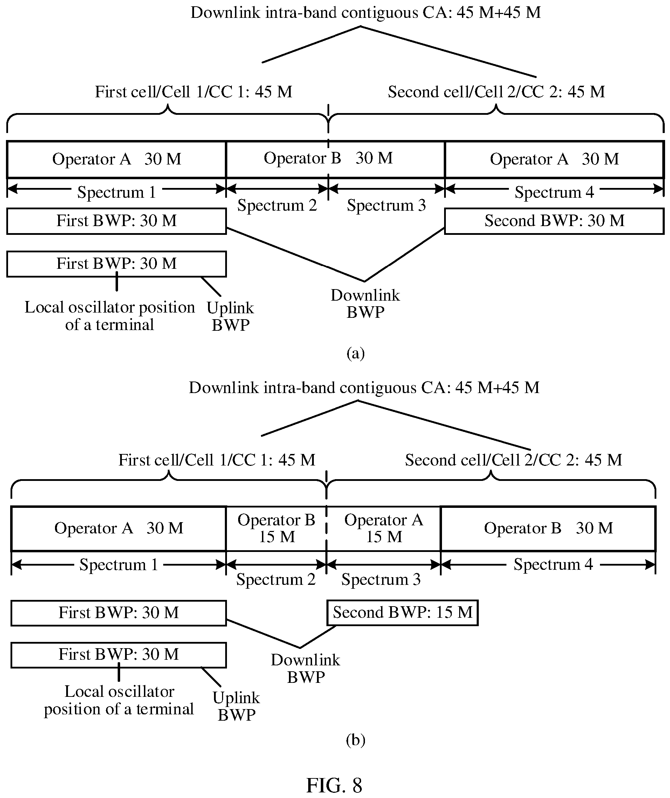

FIG. 8 is a diagram in which two cells on downlink intra-band contiguous CA are virtual standard large bandwidth cells. If both the first cell and the second cell are virtual standard large bandwidth cells configured on the base station side, a scenario in which the CC 1 and the CC 2 are combined into the downlink intra-band contiguous CA may be shown in (a) in FIG. 8. Before the downlink intra-band contiguous CA is performed, when a standard bandwidth includes 45 M, a bandwidth of the CC 1 configured on the base station side is 45 M, and a spectrum of the CC 1 includes a spectrum 1 (30 M) of the operator A and a spectrum 2 (for example, 15 M) of the operator B; and a bandwidth of the CC 2 is 45 M, and a spectrum of the CC 2 includes a spectrum 3 (for example, 15 M) of the operator B and a spectrum 4 (30 M) of the operator A. When an operator of the UE is the operator A, and the first carrier is the CC 1, a first BWP of the CC 1 is the spectrum 1 of the operator A, the second carrier may be the CC 2, and the second BWP of the CC 2 is the spectrum 4 of the operator A. A bandwidth of the downlink intra-band contiguous CA formed by the CC 1 and the CC 2 is 45 M+45 M.

Alternatively, a scenario in which the CC 1 the CC 2 are combined into the downlink intra-band contiguous CA may be shown in (b) in FIG. 8. Before the downlink intra-band contiguous CA is performed, when a standard bandwidth includes 45 M, a bandwidth of the CC 1 configured on the base station side is 45 M, and a spectrum of the CC 1 includes a spectrum 1 (for example, 30 M) of the operator A and a spectrum 2 (for example, 15 M) of the operator B; and a bandwidth of the CC 2 is 45 M, and a spectrum of the CC 2 includes a spectrum 3 (for example, 15 M) of the operator A and a spectrum 4 (for example, 30 M) of the operator B. When an operator of the UE is the operator A, and the first carrier is the CC 1, a first BWP of the CC 1 is the spectrum 1 of the operator A, the second carrier may be the CC 2, and the second BWP of the CC 2 is the spectrum 3 of the operator A. A bandwidth of the downlink intra-band contiguous CA formed by the CC 1 and the CC 2 is 45 M+45 M.

708: The UE sends an uplink signal to the base station on the first BWP, and receives, on the first BWP, a downlink signal sent by the base station.

To be specific, the downlink intra-band contiguous CA is performed to extend a bandwidth for receiving the downlink signal by the UE. The UE initially accesses the first BWP in the first cell for performing uplink/downlink communication with the base station.

In this way, for uplink of the UE, the valid BWP is still the first BWP in the first cell, the first BWP is used for uplink/downlink communication, a center frequency of the first BWP is at a center frequency position of the first BWP, and a local oscillator frequency is at the center frequency position of the first BWP, and does not cause interference in an uplink direction D to the operator B.

709: The UE receives an activation indication, where the activation indication is used for activating the second carrier.

For example, the base station may determine, based on a service requirement of the UE, whether to activate the second cell configured for the UE. For example, the base station determines that a current service of the UE is a data downloading service, a video playback service, or the like, and the base station may indicate the UE to activate the second cell and send the downlink signal to the UE on the downlink intra-band contiguous CA.

710: When the second carrier is activated, the UE receives downlink signals on the first carrier and the second carrier.

In this way, for the UE, the UE may activate the second carrier and the second BWP on the second carrier. When receiving the downlink signal, if the operator of the UE is the operator A, the UE not only receives the downlink signal of the operator A on the first BWP of the first carrier, but also receives the downlink signal of the operator A on the second BWP of the second carrier.

However, when the UE activates the second carrier, on the downlink intra-band contiguous CA, if the first cell corresponding to the first carrier is the virtual standard large bandwidth cell, the UE also receives a downlink signal of a non-operator A in the first cell. If the second cell is also the virtual standard large bandwidth cell, the UE also receives the downlink signal of the non-operator A in the second cell. In this way, the downlink signal of the non-operator A is an interference signal of the UE, and the interference signal may have an influence on demodulation of the received downlink signal of the operator A by the UE. Therefore, the UE needs to send downlink channel quality to the base station in a timely manner, so that the base station determines whether to deactivate the second cell.

Therefore, in some embodiments, the method further includes:

The UE sends a channel quality indicator, where the channel quality indicator indicates downlink channel quality of the downlink signal received by the terminal device on the downlink intra-band contiguous CA; and correspondingly, the base station receives the channel quality indicator sent by the UE.

When the downlink channel quality does not satisfy a channel quality threshold, the UE receives a deactivation indication, where the deactivation indication indicates the terminal device to deactivate the second carrier; and correspondingly, the base station sends the deactivation indication to the UE.

When the second carrier is deactivated, the UE receives the downlink signal on the first BWP, and sends the uplink signal on the first BWP. Correspondingly, the base station sends the downlink signal on the first BWP, and receives the uplink signal on the first BWP.

For example, FIG. 6 is used as an example. In the TDD scenario, if the CC 2 is activated, on the downlink intra-band contiguous CA, the CC 1 and the CC 2 share one radio frequency channel. When receiving downlink data on the downlink intra-band contiguous CA, the UE not only receives the downlink signal of the operator A on the first BWP and the second BWP, but also receives a downlink signal in a band 2 of the operator B. The UE may periodically send a channel state information-reference signal (channel state information-reference signal, CSI-RS) report of the first cell to the base station. The CSI-RS report includes a channel quality indicator (channel quality indicator, CQI) of the first cell, and indicates downlink channel quality of a downlink signal received by the UE in the first cell. In addition, the UE also periodically sends a CSI-RS report of the second cell to the base station. The CSI-RS report includes a CQI of the second cell. On the downlink contiguous CA, if the operator of the UE is the operator A, signal strength of a signal that is of the operator B and that is received by the UE is higher than signal strength of a signal that is of the operator A and that is received by the UE, and a signal strength difference is large. This may cause saturation of a signal amplifier in a radio frequency channel, causing blocking on receiving the downlink signal by the UE. To be specific, signal strength of a signal that is on an invalid band and that is received by the UE is much higher than signal strength of a signal received on a valid BWP, which has an influence on background noise rise of receiving, by the UE, the wanted signal on the first BWP and the second BWP, and finally, has an influence on performance of performing demodulation on the wanted signal on the first BWP and the second BWP by the UE. Consequently, a signal-to-noise ratio is low, and demodulation performed on the wanted signal by the UE fails.

Therefore, in this case, the base station may send the deactivation indication to the UE, to indicate the UE to deactivate the second carrier. When receiving the deactivation indication, the UE may return to a single-carrier mode, that is, the UE performs uplink/downlink transmission only on the first BWP of the first carrier.

In some embodiments, after deactivating the second carrier, the base station may further perform reactivation hysteresis penalty. For example, after deactivation time reaches specific time, if the downlink intra-band contiguous CA further needs to be performed on a service of the UE, the base station may further send the activation indication to the UE again, to activate the second carrier.

It should be noted that, in embodiments of this application, an example in which the downlink intra-band contiguous CA is performed on two CCs is used for description. However, this application is not limited to performing the downlink intra-band contiguous CA only on the two CCs, and the downlink intra-band contiguous CA may be further performed on more than two CCs. In addition, for each CC on the downlink intra-band contiguous CA, the CC may alternatively have spectrums of more than two types of operators, and the CC is not limited to having spectrums of only two types of operators.

Therefore, in this application, if at least one of the first carrier and the second carrier includes a spectrum of an operator and a spectrum of another operator that are of the terminal device, and the first carrier and the second carrier support the downlink intra-band contiguous CA, as specified in a standard, when a spectrum bandwidth for CA needs to be a standard spectrum bandwidth, one of the bandwidth of the first carrier and the bandwidth of the second carrier is a virtual standard bandwidth, and the other of the bandwidth of the first carrier and the bandwidth of the second carrier is a virtual standard bandwidth or a standard bandwidth.

In this application, when the first CBW configured for the terminal device is the bandwidth of the first carrier, and the second CBW is the bandwidth of the second carrier, if the first carrier and the second carrier support the downlink intra-band contiguous CA, after the first configuration information and the second configuration information are sent to the terminal device, it means that the first carrier and the second carrier on a spectrum on which the first BWP and the second BWP that have two segments of non-contiguous spectrums are combined into the downlink intra-band contiguous CA. On the downlink intra-band contiguous CA, both the first BWP and the second BWP are useful spectrums of the terminal device. In this way, even if the spectrums of the first BWP and the second BWP are discrete non-standard bandwidth spectrums of the operator, because the bandwidths of the first carrier and the second carrier are virtual standard bandwidths or standard bandwidths, and combination of the first carrier and the second carrier into the downlink intra-band contiguous CA is supported, the first BWP and the second BWP may be jointly used, to effectively integrate and use discrete spectrums in the TDD scenario, improve utilization of the discrete spectrums, and improve a downlink throughput of the terminal device.

In addition, in an intra-band contiguous CA scenario, the UE multiplexes a radio frequency channel of a PCell, but hardware costs of the terminal are not increased, and support is high. In the uplink of the UE, when a local oscillator frequency is at a center frequency position of the available BWP, interference to an uplink signal of another operator can be reduced.

It may be understood that to implement functions in the foregoing embodiments, the base station and the terminal (for example, the UE) include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

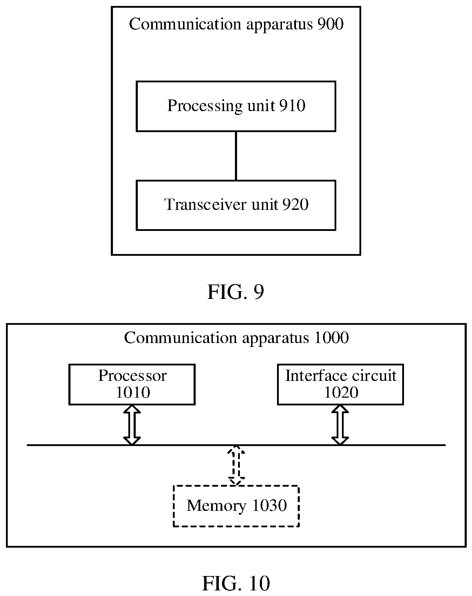

FIG. 9 and FIG. 10 are diagrams of structures of possible communication apparatuses according to embodiments of this application. These communication apparatuses may be configured to implement the function of the terminal or the base station in the foregoing method embodiments, and therefore can also achieve beneficial effects of the foregoing method embodiments. In embodiments of this application, the communication apparatuses may be the terminal 120 shown in FIG. 1, may be the base station 110 shown in FIG. 1, or may be a module (for example, a chip) used in the terminal or the base station.

As shown in FIG. 9, the communication apparatus 900 includes a processing unit 910 and a transceiver unit 920. The communication apparatus 900 is configured to implement a function of the terminal or the base station in the method embodiment shown in FIG. 5 and/or FIG. 7.

When the communication apparatus 900 is configured to implement the function of the terminal in the method embodiment shown in FIG. 5 and/or FIG. 7, the transceiver unit 920 is configured to receive first configuration information and second configuration information, and the processing unit 910 is configured to process the first configuration information and the second configuration information. The processing unit 910 may be further configured to determine a CBW and an available BWP of the terminal on a first carrier, and a CBW and an available BWP of the terminal on a second carrier. The first carrier may include a spectrum of an operator and a spectrum of another operator, and/or the second carrier may include a spectrum of an operator and a spectrum of another operator.

When the communication apparatus 900 is configured to implement the function of the base station in the method embodiment shown in FIG. 5 and/or FIG. 7, the transceiver unit 920 is configured to send first configuration information and second configuration information, and the processing unit 910 is configured to generate the first configuration information and the second configuration information.

For more detailed descriptions of the processing unit 910 and the transceiver unit 920, refer to the related descriptions in the method embodiment shown in FIG. 5 and/or FIG. 7.

As shown in FIG. 10, the communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions executed by the processor 1010, store input data for the processor 1010 to run instructions, or store data generated after the processor 1010 runs instructions.

When the communication apparatus 1000 is configured to implement the method shown in FIG. 5 and/or FIG. 7, the processor 1010 is configured to implement the function of the foregoing processing unit 910, and the interface circuit 1020 is configured to implement the function of the foregoing transceiver unit 920.

When the communication apparatus is a chip used in a terminal, the chip in the terminal implements a function of the terminal in the method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent by these modules to the base station.

When the communication apparatus is a chip used in a base station, the chip in the base station implements a function of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent by these modules to the terminal.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entities A and B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible by the computer, or a data storage device, for example, a server or a data center integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In text descriptions of this application, the character "/" generally represents an "or" relationship between associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A carrier aggregation method, wherein the method comprises:

     sending first configuration information, wherein the first configuration information comprises a first channel bandwidth CBW and a first bandwidth part BWP of a terminal device on a first carrier, and the first CBW is a bandwidth of the first carrier; and
     sending second configuration information, wherein the second configuration information comprises a second CBW and a second BWP of the terminal device on a second carrier, the second CBW is a bandwidth of the second carrier, spectrums of the first BWP and the second BWP are non-contiguous, and combination of the second carrier and the first carrier into downlink intra-band contiguous carrier aggregation CA is supported, wherein the first carrier satisfies the following condition 1, the second carrier satisfies the following condition 2, or the first carrier and the second carrier satisfy the following condition 1 and condition 2:

the condition 1 is that the first carrier comprises a spectrum of an operator and a spectrum of another operator, and the first BWP is an available BWP on the spectrum of the operator on the first carrier; and
the condition 2 is that the second carrier comprises a spectrum of an operator and a spectrum of another operator, and the second BWP is an available BWP on the spectrum of the operator on the second carrier.

2. The method according to claim 1, wherein the sending the first configuration information comprises:
when the terminal device initially accesses the first carrier, sending the first configuration information to the terminal device on an initial BWP of the first carrier.

3. The method according to claim 1 or 2, wherein the method further comprises:
sending a downlink signal to the terminal device on the first BWP, and receiving, on the first BWP, an uplink signal sent by the terminal device.

4. The method according to any one of claims 1 to 3, wherein before the sending the first configuration information, the method further comprises:
receiving capability information sent by the terminal device, wherein the capability information comprises an indication that the terminal device supports intra-band contiguous CA and a carrier bandwidth supported by the terminal device.

5. The method according to any one of claims 1 to 4, wherein the sending the second configuration information comprises:
sending the second configuration information to the terminal device on the first BWP.

6. The method according to any one of claims 1 to 5, wherein the method further comprises:

sending an activation indication to the terminal device, wherein the activation indication is used for activating the second carrier; and
sending downlink signals to the terminal device on the first carrier and the second carrier.

7. The method according to claim 6, wherein the method further comprises:

receiving a channel quality indicator sent by the terminal device, wherein the channel quality indicator indicates downlink channel quality of a downlink signal received by the terminal device on the downlink intra-band contiguous CA;
when the downlink channel quality does not satisfy a channel quality threshold, sending a deactivation indication, wherein the deactivation indication indicates the terminal device to deactivate the second carrier; and
sending a downlink signal to the terminal device on the first BWP, and receiving, on the first BWP, an uplink signal sent by the terminal device.

8. A carrier aggregation method, comprising:

receiving first configuration information, wherein the first configuration information comprises a first channel bandwidth CBW and a first bandwidth part BWP of a terminal device on a first carrier, and the first CBW is a bandwidth of the first carrier; and
receiving second configuration information, wherein the second configuration information comprises a second CBW and a second BWP of the terminal device on a second carrier, the second CBW is a bandwidth of the second carrier, spectrums of the first BWP and the second BWP are non-contiguous, and combination of the second carrier and the first carrier into downlink intra-band contiguous carrier aggregation CA is supported, wherein the first carrier satisfies the following condition 1, the second carrier satisfies the following condition 2, or the first carrier and the second carrier satisfy the following condition 1 and condition 2:

the condition 1 is that the first carrier comprises a spectrum of an operator and a spectrum of another operator, and the first BWP is an available BWP on the spectrum of the operator on the first carrier; and

the condition 2 is that the second carrier comprises a spectrum of an operator and a spectrum of another operator, and the second BWP is an available BWP on the spectrum of the operator on the second carrier.

9. The method according to claim 8, wherein the receiving the first configuration information comprises:
when the first carrier is initially accessed, receiving the first configuration information on an initial uplink/downlink BWP of the first carrier.

10. The method according to claim 8 or 9, wherein the method further comprises:
sending an uplink signal on the first BWP, and receiving a downlink signal on the first BWP.

11. The method according to any one of claims 8 to 10, wherein before the receiving the first configuration information, the method further comprises:
sending capability information of the terminal device, wherein the capability information comprises an indication that the terminal device supports intra-band contiguous CA and a carrier bandwidth supported by the terminal device.

12. The method according to any one of claims 8 to 11, wherein the receiving the second configuration information comprises:
receiving the second configuration information on the first BWP.

13. The method according to any one of claims 8 to 12, wherein the method further comprises:

receiving an activation indication, wherein the activation indication is used for activating the second carrier; and
when the second carrier is activated, receiving downlink signals on the first carrier and the second carrier.

14. The method according to claim 13, wherein the method further comprises:

sending a channel quality indicator, wherein the channel quality indicator indicates downlink channel quality of a downlink signal received by the terminal device on the downlink intra-band contiguous CA;
when the downlink channel quality does not satisfy a channel quality threshold, receiving a deactivation indication, wherein the deactivation indication indicates the terminal device to deactivate the second carrier; and
when the second carrier is deactivated, receiving a downlink signal on the first BWP, and sending an uplink signal on the first BWP.

15. A communication apparatus, comprising:

a sending unit, configured to send first configuration information, wherein the first configuration information comprises a first channel bandwidth CBW and a first bandwidth part BWP of a terminal device on a first carrier, and the first CBW is a bandwidth of the first carrier, wherein
the sending unit is further configured to send second configuration information, wherein the second configuration information comprises a second CBW and a second BWP of the terminal device on a second carrier, the second CBW is a bandwidth of the second carrier, spectrums of the first BWP and the second BWP are non-contiguous, and combination of the second carrier and the first carrier into downlink intra-band contiguous carrier aggregation CA is supported, wherein
the first carrier satisfies the following condition 1, the second carrier satisfies the following condition 2, or the first carrier and the second carrier satisfy the following condition 1 and condition 2:

the condition 1 is that the first carrier comprises a spectrum of an operator and a spectrum of another operator, and the first BWP is an available BWP on the spectrum of the operator on the first carrier; and
the condition 2 is that the second carrier comprises a spectrum of an operator and a spectrum of another operator, and the second BWP is an available BWP on the spectrum of the operator on the second carrier.

16. The communication apparatus according to claim 15, wherein the sending unit is configured to:
when the terminal device initially accesses the first carrier, send the first configuration information to the terminal device on an initial uplink/downlink first BWP of the first carrier.

17. The communication apparatus according to claim 15 or 16, wherein the sending unit is further configured to send a downlink signal to the terminal device on the first BWP; and
a receiving unit is configured to receive, on the first BWP, an uplink signal sent by the terminal device.

18. The communication apparatus according to any one of claims 15 to 17, wherein the receiving unit is configured to: before sending the first configuration information, receive capability information sent by the terminal device, wherein the capability information comprises an indication that the terminal device supports intra-band contiguous CA and a carrier bandwidth supported by the terminal device.

19. The communication apparatus according to any one of claims 15 to 18, wherein the sending unit is configured to: send the second configuration information to the terminal device on the first BWP.

20. The communication apparatus according to any one of claims 15 to 19, wherein the sending unit is further configured to:

   send an activation indication, wherein the activation indication is used for activating the second carrier; and
   send downlink signals to the terminal device on the first carrier and the second carrier.

21. The communication apparatus according to claim 20, wherein the receiving unit is configured to receive a channel quality indicator sent by the terminal device, wherein the channel quality indicator indicates downlink channel quality of a downlink signal received by the terminal device on the downlink intra-band contiguous CA;

   the sending unit is further configured to: when the downlink channel quality does not satisfy a channel quality threshold, send a deactivation indication, wherein the deactivation indication indicates the terminal device to deactivate the second carrier; and
   the sending unit is further configured to send a downlink signal to the terminal device on the first BWP, and the receiving unit is further configured to receive, on the first BWP, an uplink signal sent by the terminal device.

22. A communication apparatus, comprising:

   a receiving unit, configured to receive first configuration information, wherein the first configuration information comprises a first channel bandwidth CBW and a first bandwidth part BWP of a terminal device on a first carrier, and the first CBW is a bandwidth of the first carrier, wherein
   the receiving unit is further configured to receive second configuration information, wherein the second configuration information comprises a second CBW and a second BWP of the terminal device on a second carrier, the second CBW is a bandwidth of the second carrier, spectrums of the first BWP and the second BWP are non-contiguous, and combination of the second carrier and the first carrier into downlink intra-band contiguous carrier aggregation CA is supported, wherein
   the first carrier satisfies the following condition 1, the second carrier satisfies the following condition 2, or the first carrier and the second carrier satisfy the following condition 1 and condition 2:

      the condition 1 is that the first carrier comprises a spectrum of an operator and a spectrum of another operator, and the first BWP is an available BWP on the spectrum of the operator on the first carrier; and
      the condition 2 is that the second carrier comprises a spectrum of an operator and a spectrum of another operator, and the second BWP is an available BWP on the spectrum of the operator on the second carrier.

23. The communication apparatus according to claim 22, wherein the receiving unit is configured to:
   when the first carrier is initially accessed, receive the first configuration information on an initial uplink/downlink BWP of the first carrier.

24. The communication apparatus according to claim 22 or 23, further comprising a sending unit, configured to send an uplink signal on the first BWP, wherein
   the receiving unit is further configured to receive a downlink signal on the first BWP.

25. The communication apparatus according to any one of claims 22 to 24, further comprising a sending unit, configured to:
   before receiving the first configuration information, send capability information of the terminal device, wherein the capability information comprises an indication that the terminal device supports intra-band contiguous CA.

26. The communication apparatus according to any one of claims 22 to 25, wherein the receiving unit is configured to:
   receive the second configuration information on the first BWP.

27. The communication apparatus according to any one of claims 22 to 26, wherein the receiving unit is further configured to:

receive an activation indication, wherein the activation indication is used for activating the second carrier; and
when the second carrier is activated, receive downlink signals on the first carrier and the second carrier.

28. The communication apparatus according to claim 27, further comprising a sending unit, configured to send a channel quality indicator, wherein the channel quality indicator indicates downlink channel quality of a downlink signal received by the terminal device on the downlink intra-band contiguous CA;

the receiving unit is further configured to: when the downlink channel quality does not satisfy a channel quality threshold, receive a deactivation indication, wherein the deactivation indication indicates the terminal device to deactivate the second carrier; and
when the second carrier is deactivated, the receiving unit is further configured to receive a downlink signal on the first BWP, and the sending unit is configured to send an uplink signal on the first BWP.

29. A computer-readable storage medium, comprising computer instructions, wherein when the computer instructions are run on an electronic device, the electronic device is caused to perform the method according to any one of claims 1 to 14.

30. A computer program product, comprising computer instructions, wherein when the computer instructions are run on an electronic device, the electronic device is caused to perform the method according to any one of claims 1 to 14.

31. A system, wherein the system comprises a network device and a terminal device, the network device is configured to perform the method according to any one of claims 1 to 7, and the terminal device is configured to perform the method according to any one of claims 8 to 14.

FIG. 1

| Operator A   30 M | Operator B   30 M | Operator A   30 M |

FIG. 2

FIG. 3

Base station of
an operator

Base station of
another operator

A

D

C

B

UE of an
operator

UE of another
operator

FIG. 4

| Network device | | Terminal device |
|---|---|---|

501: The terminal device receives first configuration information, where the first configuration information includes a first CBW and a first BWP of the terminal device on a first carrier, and the first CBW is a bandwidth of the first carrier

502: Second configuration information, where the second configuration information includes a second CBW and a second BWP on a second carrier, the second CBW is a bandwidth of the second carrier, combination of the second carrier and the first carrier into downlink intra-band contiguous CA is supported, and at least one of the first carrier and the second carrier includes a spectrum of an operator and a spectrum of another operator

FIG. 5

Downlink intra-band contiguous CA: 60 M+30 M

First cell/Cell 1/CC 1: 60 M          Second cell/Cell 2/CC 2: 30 M

| Operator A    30 M | Operator B    30 M | Operator A    30 M |

|←——— Spectrum 1 ———→|←——— Spectrum 2 ———→|←——— Spectrum 3 ———→|

| First BWP: 30 M |                    | Second BWP: 30 M |

| First BWP: 30 M |

Local oscillator
position of a terminal          Uplink          Downlink
                                BWP              BWP

FIG. 6

| Base station | | UE |
|---|---|---|

**701:** At least one virtual large bandwidth cell is configured on a base station side, where the at least one virtual large bandwidth cell includes a first cell, an initial uplink/downlink BWP of the first cell is a valid bandwidth part of the first cell, and the configuration complies with a requirement of a standard specification

**702:** The at least one virtual large bandwidth cell is configured on the base station side, where frequency domain positions of all channels in each of the at least one virtual large bandwidth cell are valid bandwidth parts of the virtual large bandwidth cell, and the configuration complies with the requirement of the standard specification

**703:** When accessing a network, the UE performs cell scanning and system message parsing on a common control channel, and selects the first cell to be accessed

**704:** The UE initiates an access procedure of accessing the first cell to access the first cell

**705:** Capability information, including an indication that a terminal device supports intra-band contiguous CA and a carrier bandwidth supported by the terminal device

**706:** First configuration information, where the first configuration information includes a first CBW and a first BWP on a first carrier, and the first CBW is a bandwidth of the first carrier

**707:** Second configuration information, where the second configuration information includes a second CBW and a second BWP on a second carrier, the second CBW is a bandwidth of the second carrier, combination of the second carrier and the first carrier into downlink intra-band contiguous CA is supported, and at least one of the first carrier and the second carrier includes a spectrum of an operator and a spectrum of another operator

**708:** The UE sends an uplink signal to the base station on the first BWP, and receives, on the first BWP, a downlink signal sent by the base station

**709:** The UE receives an activation indication, where the activation indication is used for activating the second carrier

**710:** The UE receives downlink signals on the first carrier and the second carrier

FIG. 7

Downlink intra-band contiguous CA: 45 M+45 M

First cell/Cell 1/CC 1: 45 M    Second cell/Cell 2/CC 2: 45 M

| Operator A   30 M | Operator B   30 M | Operator A   30 M |

← Spectrum 1 → Spectrum 2   Spectrum 3 ← Spectrum 4 →

First BWP: 30 M    Second BWP: 30 M

First BWP: 30 M

Local oscillator position   Uplink    Downlink
of a terminal              BWP       BWP

(a)

Downlink intra-band contiguous CA: 45 M+45 M

First cell/Cell 1/CC 1: 45 M    Second cell/Cell 2/CC 2: 45 M

| Operator A   30 M | Operator B 15 M | Operator A 15 M | Operator B   30 M |

← Spectrum 1 → Spectrum 2   Spectrum 3 ← Spectrum 4 →

First BWP: 30 M    Second BWP: 15 M

First BWP: 30 M

Local oscillator    Downlink
position of a terminal   BWP

Uplink
BWP

(b)

FIG. 8

Communication apparatus 900

Processing unit 910

Transceiver unit 920

FIG. 9

Communication apparatus 1000

Processor 1010

Interface circuit 1020

Memory 1030

FIG. 10

## INTERNATIONAL SEARCH REPORT

| International application No. |
| --- |
| **PCT/CN2024/112859** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC: H04L; H04W

Documentation searched other than minimum documentation to the extent that such documents are included in the fields searched

Electronic data base consulted during the international search (name of data base and, where practicable, search terms used)

CNKI; CNTXT; ENTXTC; ENTXT; DWPI; 3GPP: 配置, 载波, 频带, 带宽, 信道带宽, 带宽部分, 连续, 不连续, 非连续, 带内, 频谱, 运营商, 可用, 聚合, CA, configur+, carrier, band, CBW, BWP, continuous, non-continuous, intra, frequency, operator, available

**C. DOCUMENTS CONSIDERED TO BE RELEVANT**

| Category* | Citation of document, with indication, where appropriate, of the relevant passages | Relevant to claim No. |
| --- | --- | --- |
| A | CN 114402562 A (QUALCOMM INC.) 26 April 2022 (2022-04-26) <br> claims 1-11, and description, paragraphs 38-74 | 1-31 |
| A | CN 107548069 A (HUAWEI TECHNOLOGIES CO., LTD.) 05 January 2018 (2018-01-05) <br> entire document | 1-31 |
| A | CN 113709871 A (DATANG MOBILE COMMUNICATIONS EQUIPMENT CO., LTD.) 26 November 2021 (2021-11-26) <br> entire document | 1-31 |
| A | US 2014241183 A1 (TELEFONAKTIEBOLAGET LM ERICSSON (PUBL)) 28 August 2014 (2014-08-28) <br> entire document | 1-31 |
| A | WO 2023044649 A1 (ZTE CORP.) 30 March 2023 (2023-03-30) <br> entire document | 1-31 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 October 2024** | **22 October 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/112859**

| Patent document cited in search report | | | Publication date (day/month/year) | Patent family member(s) | | | Publication date (day/month/year) |
|---|---|---|---|---|---|---|---|
| CN | 114402562 | A | 26 April 2022 | WO | 2021062004 | A1 | 01 April 2021 |
| | | | | US | 2021091897 | A1 | 25 March 2021 |
| | | | | EP | 4035298 | A1 | 03 August 2022 |
| | | | | IN | 202227008571 | A | 01 July 2022 |
| CN | 107548069 | A | 05 January 2018 | WO | 2017219961 | A1 | 28 December 2017 |
| CN | 113709871 | A | 26 November 2021 | | None | | |
| US | 2014241183 | A1 | 28 August 2014 | ES | 2785308 | T3 | 06 October 2020 |
| | | | | EP | 2962419 | A1 | 06 January 2016 |
| | | | | WO | 2014132143 | A1 | 04 September 2014 |
| | | | | US | 2015172979 | A1 | 18 June 2015 |
| | | | | US | 2016183136 | A1 | 23 June 2016 |
| | | | | PT | 2962419 | T | 28 April 2020 |
| | | | | DK | 2962419 | T3 | 02 June 2020 |
| | | | | BR | 112015017769 | A2 | 11 July 2017 |
| | | | | HUE | 049120 | T2 | 28 September 2020 |
| | | | | CN | 105009503 | A | 28 October 2015 |
| WO | 2023044649 | A1 | 30 March 2023 | EP | 4393238 | A1 | 03 July 2024 |
| | | | | US | 2024224251 | A1 | 04 July 2024 |
| | | | | KR | 20240054309 | A | 25 April 2024 |
| | | | | CN | 118140553 | A | 04 June 2024 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311128815